# EUROPEAN PATENT SPECIFICATION

(11) **EP 2 906 361 B1**
(45) Date of publication and mention of the grant of the patent: **01.08.2018**
(21) Application number: 13845392.3
(22) Date of filing: 10.10.2013
(51) Int. Cl.: B05D 1/12, B05D 3/02, C08L 63/00, C09D 163/00, C08L 23/06

(54) **COATING COMPOSITIONS AND PROCESSES FOR MAKING THE SAME**
BESCHICHTUNGSZUSAMMENSETZUNGEN UND VERFAHREN ZUR HERSTELLUNG DAVON
COMPOSITIONS DE REVÊTEMENT ET PROCÉDÉS DE FABRICATION DE CELLES-CI

(30) Priority: 10.10.2012 US 201261711865 P; 08.08.2013 US 201361863697 P
(43) Date of publication of application: 19.08.2015
(73) Proprietor: ShawCor Ltd., Toronto, Ontario M9W 1M7 (CA)
(72) Inventor: EDMONDSON, Stephen James, Oakville, Ontario L6J 6J9 (CA); ANDRENACCI, Alfredo, Toronto, Ontario M1V 2W5 (CA); GUJARE, Nitin, Mississauga, Ontario L5R 3V9 (CA); HOLUB, Jiri, Toronto, Ontario M9V 1Y1 (CA)
(74) Representative: Vossius & Partner Patentanwälte Rechtsanwälte mbB
(86) International application number: PCT/CA2013/050765
(87) International publication number: WO 2014/056107

(56) References cited:
- WO-A1-97/13589
- JP-B2- 3 428 388
- US-A- 5 300 336
- US-A1- 2011 152 408
- US-B2- 7 790 288

## Description

### FIELD

The present invention relates to processes for making coating compositions,
and methods of application of the coating compositions. Further, the present invention relates to a process for coating a metal substrate, for example an elongated metal tubular substrate such as a pipe. Most particularly, the coating can be used as an anti-corrosion coating on a pipe for use in oil, gas and water pipeline applications.

### BACKGROUND

Fusion bonded epoxy (FBE) is often used as an anti-corrosion coating on pipe. FBE consists of a solid epoxy which is applied to a clean, hot pipe, typically using a powder coating process. The FBE powder melts when it contacts the hot pipe, forming a generally uniform film surface. FBE coatings provide excellent anti-corrosion properties, but have poor low temperature bend-ability and impact resistance when used as a single layer coating, and are thus prone to impact damage during transportation. Single layer FBE coatings are also prone to absorbing water when exposed to elevated temperatures (above 50°C) in hot and wet environments; this in turn can cause blistering when induction heating is used in preparing a field joint. FBE can be applied as a dual layer coating to provide tough physical properties and minimize damage during handling, transportation and installation. However, dual layer FBE coatings are not price competitive.

US patent 5,178,902, assigned to the present applicant, describes a high performance composite coating (HPCC) for pipe, comprising three layers of material, namely an FBE coating, which itself is coated with an adhesive layer, followed by a polyolefin top coat. The polyolefin top coat is a non-crosslinked polyolefin, and provides very good impact resistance. It also prevents moisture permeation and is resistant to elevated ambient temperatures (for example, above 50°C but below 80°C) in hot and wet environments. The primary purpose of the intermediate, adhesive layer, is to bond the polyolefin layer to the FBE coating. Typically, without the use of such an adhesive layer, there can be some difficulty in obtaining a strong and durable bond between the FBE coating and the polyolefin top coat. In addition, with this approach, the cost of such a system can be significantly higher than the main competitive system, which is an FBE only single layer coating.

Other prior art approaches include "compatibilizing" the top coat polyolefin layer to the FBE coating, using a blend of epoxy and polyolefin in the top coat layer. Such prior art approaches can be found in U.S. Patents 5,198,497 (Mathur), 5,709,948 (Perez et al) and WO 2007/022031 published February 22, 2007 (Perez et al). Relatively high temperatures are required during the blending of the composition in order to polymerize the epoxy resin component. The fact that polymerization occurs during the mixing of the two components, i.e. in the presence of the polyolefin, creates a so-called "interpenetrating polymer network". These high temperatures require the use of higher polyolefins, such as polypropylene. Also by Perez et al., US patents 8,231,943, 7,790,288 and patent publication 2007/0034316, describe interpenetrating polymer networks comprising a polyolefin (in all cases, polypropylene) and an epoxy. However, though these interpenetrating polymer networks - based compositions appear to work well, they require considerable skill, expense, and high temperatures to make, due to the requirement for an interpenetrating polymer network. Notably, to polymerize at least one of the polyolefin and epoxy in the presence of the other to form an interpenetrating network requires considerably higher temperature and complex equipment.

Other prior art coatings include the polyolefin and epoxy resin mixtures proposed in U.S. patent 4,345,004 (Miyake et al). However, blends exemplified in the Miyake et al patent are not as stable as may be considered desirable as the epoxy component tends to separate as a phase separate from the polyolefin component, or the blends require solvents for application. The latter present problems of porosity of the coating as a result of off-gassing of solvent residue.

U.S. patent application 2011/0152408 A1 (Cunningham et al.) relates to a coating composition comprising in admixture a curable epoxy resin, a curing agent, a polyolefin and a filler in particulate form.

Recently, it has been found that a cross-linked top coat polyolefin layer is desirable. Cross-linked polyolefins provide much improved temperature resistance, are much more impact resistant and generally more durable than their non-cross linked equivalents. However, inherent in their nature is that melting a cross-linked polyolefin requires a much higher melt temperature, which can make it impossible or impractical for extruding directly onto a pipe, or, worse, onto an FBE coating that is already applied to the pipe, since the temperature at which the cross-linked polyolefin can be extruded will often exceed the melt temperature of the FBE layer.

Thus, it would be desirable to provide a coating for a pipe that overcomes one or more of the problems of the prior art. It would also be desirable to provide a method for coating a pipe that overcomes such problems and/or is more cost effective than the prior art methods.

### SUMMARY OF THE INVENITON

In one aspect, the specification relates to a method for coating an elongate metallic tubular article, comprising:
(a) heating the elongate metallic tubular article;
(b) applying a fusion bonded epoxy coating to the elongate metallic tubular article;
(c) applying a coating composition to the fusion bonded epoxy coating;
wherein the coating composition is a melted blend of:
(i) an epoxy master batch,
(ii) a filler master batch,
(iii) a polyolefin, and, optionally
(iv) an adhesion promoter;
wherein the epoxy master batch is in a solid form and comprises, in admixture:
(A) a curable epoxy resin in solid form;
(B) a polyolefin containing component comprising of at least one of (i) a compatibilizer polymer that is a modified polyolefin or (ii) a mixture of a polyolefin and a compatibilizer polymer that is a modified polyolefin; said modified polyolefin containing functional groups reactive with the curable epoxy resin in solid form; and wherein the epoxy master batch is free of curing agent; and
wherein the filler master batch is in a solid form and comprises, in admixture,
(X) a filler powder component;
(Y) a polyolefin containing component comprising of at least one of (i) a compatibilizer polymer that is a modified polyolefin or (ii) a mixture of a polyolefin and a compatibilizer polymer that is a modified polyolefin; said modified polyolefin containing functional groups compatible with and/or having affinity to the filler component;
(Z) a curing agent capable of curing an epoxy resin; and wherein the filler master batch is free of epoxy resin.

In another aspect, the specification relates to a method for coating an elongate metallic tubular article, comprising:
(a) heating the elongate metallic tubular article;
(b) applying a fusion bonded epoxy coating to the elongate metallic tubular article;
(c) applying a coating composition to the fusion bonded epoxy coating;
wherein the coating composition is a melted blend of:
(i) an epoxy master batch,
(ii) a filler master batch,
(iii) a cure master batch,
(iv) a polyolefin, and, optionally,
(v) an adhesion promoter;
wherein the epoxy master batch is in a solid form and comprises, in admixture:
(A) a curable epoxy resin in solid form;
(B) a polyolefin containing component comprising of at least one of (i) a compatibilizer polymer that is a modified polyolefin or (ii) a mixture of a polyolefin and a compatibilizer polymer that is a modified polyolefin; said modified polyolefin containing functional groups reactive with the curable epoxy resin in solid form; and wherein the epoxy master batch is free of curing agent; and
wherein the filler master batch is in a solid form and comprises, in admixture,
(X) a filler powder component;
(Y) a polyolefin containing component comprising of at least one of (i) a compatibilizer polymer that is a modified polyolefin or (ii) a mixture of a polyolefin and a compatibilizer polymer that is a modified polyolefin; said modified polyolefin containing functional groups compatible with and/or having affinity to the filler component; and wherein the filler master batch is free of curing agent; and
wherein the cure master batch is in a solid form and comprises, in admixture,
(Z) a polyolefin containing component comprising of at least one of (i) a polyolefin; (ii) a compatibilizer polymer that is a modified polyolefin or (ii) a mixture of a polyolefin and a compatibilizer polymer that is a modified polyolefin; said modified polyolefin containing functional groups reactive with the filler component; and
(Z1) a curing agent capable of curing an epoxy resin; and wherein the cure master batch is free of epoxy resin.

Herein disclosed is an epoxy master batch for use in a method disclosed herein, comprising in admixture:
(A) a curable epoxy resin in solid form; and
(B) a polyolefin containing component comprising of at least one of (i) a compatibilizer polymer that is a modified polyolefin or (ii) a mixture of a polyolefin and a compatibilizer polymer that is a modified polyolefin; said modified polyolefin containing functional groups reactive with the curable epoxy resin in solid form;
wherein the epoxy master batch is free of curing agent.

In still another aspect, the specification relates to a filler master batch for use in a method disclosed herein, comprising in admixture:
(A) a filler powder component;
(B) a polyolefin containing component comprising of at least one of (i) a compatibilizer polymer that is a modified polyolefin or (ii) a mixture of a polyolefin and a compatibilizer polymer that is a modified polyolefin; said modified polyolefin containing functional groups compatible with and/or having affinity to the filler component;
(C) a curing agent capable of curing an epoxy resin;
wherein the master batch is free of epoxy resin.

In a still further aspect, the specification relates to a filler master batch for use in a method disclosed herein, comprising in admixture:
(A) a filler powder component; and
(B) a polyolefin containing component comprising of at least one of (i) a compatibilizer polymer that is a modified polyolefin or (ii) a mixture of a polyolefin and a compatibilizer polymer that is a modified polyolefin; said modified polyolefin containing functional groups compatible with and/or having affinity to the filler component;
wherein the master batch is free of epoxy resin.

Herein disclosed is a filler master batch for use in a method disclosed herein, consisting essentially of, in admixture, by weight: about 28% polyethylene; about 2% grafted polyethylene; about 1% adhesion promoter; about 68% filler powder; and about 1% curing agent.

In another further aspect, the specification relates to a cure master batch for use in a method disclosed herein, comprising, in admixture,
(Z) a polyolefin containing component comprising of at least one of (i) a polyolefin; (ii) a compatibilizer polymer that is a modified polyolefin or (ii) a mixture of a polyolefin and a compatibilizer polymer that is a modified polyolefin; said modified polyolefin containing functional groups compatible with and/or having affinity to the filler component; and
(Z1) a curing agent capable of curing an epoxy resin; and wherein the cure master batch is free of epoxy resin.

In still another further aspect, the specification relates to a kit comprising:
[A] an epoxy master batch as disclosed herein;
[B] a filler master batch as disclosed herein;
[C] instructions for performing a method disclosed herein, for the manufacture of a coating composition, said instructions including instructions for combining the epoxy master batch with the filler master batch, a polyolefin, and optionally an adhesion promoter/compatibilizer, and melting said combination to form the coating composition.

In another still further aspect, the specification relates to a kit comprising:
[A] an epoxy master batch as disclosed herein;
[B] a filler master batch as disclosed herein;
[C] a cure master batch as disclosed herein;
[D] instructions for performing the method as disclosed herein, for the manufacture of a coating composition, said instructions including instructions for combining the epoxy master batch, the filler master batch, the cure master batch, a polyolefin, and optionally an adhesion promoter/compatibilizer, and melting said combination to form the coating composition.

In another aspect, the specification relates to a method for manufacturing a coating composition, comprising:
- combining an epoxy master batch as disclosed herein, a filler master batch as disclosed herein, a polyolefin, and optionally an adhesion promoter to form an essentially homogeneous mixture;
- melting the essentially homogeneous mixture to form the coating composition.

In a further aspect, the specification relates to a method for coating an elongate metallic tubular article having an exterior surface and an interior surface, comprising, in-line: (a) applying a crosslinkable polyolefin composition to the exterior surface to form a polyolefin coating thereon; (b) subjecting the polyolefin coating to a source of energy, thereby cross-linking the polyolefin coating, transforming the polyolefin coating into a cross-linked polyolefin coating; and (c) rapidly cooling the cross-linked polyolefin coating.

In an embodiment of the invention, the applying of the crosslinkable polyolefin composition comprises an extrusion onto the exterior surface of a hot, melted, crosslinkable polyolefin composition.

In a further embodiment of the invention, the applying of the crosslinkable polyolefin composition comprises a powder coating of the exterior surface with the crosslinkable polyolefin composition.

In yet another embodiment of the invention the applying of the crosslinkable polyolefin composition comprises both a powder coating of the exterior surface with the crosslinkable polyolefin composition and an extrusion onto the exterior surface of a hot, melted, crosslinkable polyolefin composition.

In one embodiment of the invention, the crosslinkable polyolefin composition is non-crosslinked.

In a further embodiment of the invention, the crosslinkable polyolefin composition is partially crosslinked and the cross-linked polyolefin coating comprises a greater percentage of crosslinked polyolefin than the crosslinkable polyolefin composition.

In one embodiment of the invention, the source of energy is a source of infra-red energy, a source of ultra-violet energy, an electron beam, a source of microwave energy, an induction coil, a source of hot air, and/or a convection oven.

In yet another embodiment of the invention, the rapidly cooling of the cross-linked polyolefin coating comprises a cold water quenching.

In one embodiment of the invention, the cold water quenching comprises quenching the internal surface.

In a further embodiment of the invention, the cold water quenching comprises quenching the exterior surface. In certain embodiments, the quenching of the exterior surface comprises a laminar flow quench.

In yet another embodiment of the invention, the method further comprises, in-line, and prior to step (a): (d) cleaning the exterior surface. In certain embodiments, the cleaning comprises a blasting and/or an acid washing of said exterior surface.

In one embodiment of the invention, the method further comprises, in-line, and prior to step (a): (e) heating the exterior surface. In a further embodiment of the invention, the method further comprises, in-line, prior to step (a) and after step (d): (e) heating the exterior surface. In certain embodiments, the heating is to a temperature of between 160-240°C.

In yet another embodiment of the invention, the method further comprises, in-line, prior to step (a): (f) applying an anti-corrosion layer. In one embodiment of the invention, the method further comprises, in-line, prior to step (a) and after step (d): (f) applying an anti-corrosion layer. In a further embodiment of the invention, the method further comprises, in-line, prior to step (a) and after step (e): (f) applying an anti-corrosion layer. In certain embodiments, the anticorrosion layer is a fusion bonded epoxy and the application of the anti-corrosion layer is a spray coating. In certain other embodiments, the anticorrosion layer is a liquid epoxy and the application of the anti-corrosion layer is a spraying or a painting.

In a further embodiment of the invention, the method further comprises, in-line, prior to step (a): (g) applying an adhesive layer. In one embodiment of the invention, the method further comprises, in-line, prior to step (a) and after step (d): (g) applying an adhesive layer. In yet another embodiment of the invention, the method further comprises in-line, prior to step (a) and after step (e): (g) applying an adhesive layer. In a further embodiment of the invention, the method further comprises, in-line, prior to step (a) and after step (f): (g) applying an adhesive layer. In certain embodiments, the application of the adhesive layer is an extrusion of an adhesive onto said exterior surface. In certain other embodiments, the application of the adhesive layer is spraying of an adhesive onto said exterior surface.

In yet another embodiment of the invention, the crosslinkable polyolefin composition comprises polyethylene or polypropylene. In certain embodiments, the crosslinkable polyolefin composition comprises a curable epoxy resin, a compatibilizer polymer and a curing agent capable of curing the epoxy resin. In certain embodiments, the crosslinkable polyolefin composition comprises a filler powder.

Herein disclosed is an apparatus for coating a moving elongate metallic tubular article, comprising: (a) an extrusion die station; (b) an energy source station; (c) a cooling device station; and (d) a conveying assembly for moving the elongate metallic tubular article between stations.

In an aspect, the extrusion die station comprises a flat extrusion sheet die or a circular extrusion crosshead die.

In a further aspect, the energy source station comprises a source of infra-red energy, a source of ultra-violet energy, an electron beam, a source of microwave energy, an induction coil, a source of hot air, and/or a convection oven.

In yet another aspect, the cooling device station comprises a water-dispensing system which dispenses cool water onto the elongate metallic tubular article. In certain aspects, the water-dispensing system dispenses cool water to, the exterior surface of the elongate metallic tubular article. In certain other aspects, the water-dispensing system dispenses cool water to the interior surface of the elongate metallic tubular article.

In one aspect, the apparatus further comprises a cleaning station. In certain embodiments, the cleaning station comprises a blaster and/or an acid washer. aspects,

In a further aspect, the apparatus further comprises a preheating station. In certain embodiments, the preheating station comprises a heater.

In yet another aspect, the apparatus further comprises an anti-corrosion layer applying station. In certain embodiments, the anti-corrosion layer applying station comprises a spray coater or a powder coater.

In one aspect, the apparatus further comprises an adhesive layer applying station. In certain embodiments, the adhesive layer applying station comprises an adhesion layer applicator.

Herein disclosed is an apparatus for coating a stationary elongate metallic tubular article, comprising: (a) a track proximal and generally parallel to the elongate metallic tubular article; (b) a cart system placed on the track comprising an extrusion die, an energy source and a cooling device; and (c) a conveying assembly for moving the cart system along the track.

In one aspect, the extrusion die is a flat extrusion sheet die or a circular extrusion cross head die.

In a further aspect, the energy source is a source of infra-red energy, a source of ultra-violet energy, an electron beam, a source of microwave energy, an induction coil, a source of hot air, and/or a convection oven.

In yet another aspect, the cooling device comprises a water-dispensing system which dispenses cool water onto the elongate metallic tubular article. In certain aspects, the water-dispensing system dispenses cool water to the exterior surface of the elongate metallic tubular article. In certain other aspects, the water-dispensing system dispenses cool water to the interior surface of the elongate metallic tubular article.

In one aspect, the apparatus further comprises a cleaning station. In certain aspects, the cleaning station comprises a blaster and/or an acid washer.

In a further aspect, the apparatus further comprises a heater.

In yet another aspect, the apparatus further comprises an anti-corrosion layer applicator. In certain aspects, the anti-corrosion layer applicator is a spray coater or a powder coater.

In one aspect, the apparatus further comprises an adhesive layer applicator.

In a further aspect, the cart system comprises a single cart.

In yet another aspect, the cart system comprises a plurality of carts. In certain aspects, the conveying assembly can move the plurality of carts along the track independently.

In one aspect, the elongate metallic tubular article is the track.

### BRIEF DESCRIPTION OF THE DRAWINGS

Reference will now be made, by way of example, to the accompanying drawings which show example embodiments of the present application, and in which:
Figure 1 is a schematic depicting an apparatus for coating a moving elongate metallic tubular article of the present invention;
Figure 2 is a schematic depicting an apparatus for coating a moving elongate metallic tubular article of the present invention;
Figure 3 is a schematic depicting an apparatus for coating a moving elongate metallic tubular article of the present invention;
Figure 4 is a schematic depicting an apparatus for coating a stationary elongate metallic tubular article of the present invention;
Figure 5 is a schematic depicting an apparatus for coating a moving elongate metallic tubular article of the present invention.

Similar reference numerals may have been used in different figures to denote similar components.

### DESCRIPTION

The present invention comprises two, or, in certain embodiments, three, "master batch" compositions, which are combined, *in situ,* with locally sourced polyethylene, and optionally with an adhesion promoter, to form a blended coating composition. The coating composition is easily and cheaply made, and is a blend of its constituents and not an interpenetrating network of its constituents, since no meaningful amount of polymerization occurs at or after the time the master batches are blended together. The "master batches" can be prepared off-site, and pelletized into stable, essentially inert pellets, for convenient and easy transport, measurement, and mixing. The coating composition, utilizing the master batches, can be made *in situ,* at the site of pipe coating, using cheap and available apparatus and does not require a high level of worker skill or discretion. Throughout this document, the master batches will be referred to as master batch A, master batch B, and, where utilized, master batch C.

In a preferred embodiment, a method of coating a pipe with the composition of the invention comprises mixing together the master batch compositions, for example, in a standard cement mixer or a tumble blender, along with locally sourced polyethylene, and optionally an adhesion promoter. The mixed solid product is then loaded into a one part hot extruder with an appropriate sheet die for coating a pipe. The pipe can be previously coated with epoxy, to form a two part coating composition. Optionally, the coating composition can also be further coated with a "top coat", for example, of polyester, to create a three layer U.V. Resistant coating.

### Master Batch A

In one form of the present invention, one of the master batches, "master batch A" comprises: polyolefin (preferably polyethylene, polypropylene, or a mixture of polyethylene and polypropylene, more preferably a polyethylene and a modified polyethylene such as a polyethylene grafted with maleic anhydride moieties such as Fusabond M603 (Dupont) or as otherwise described below); solid epoxy resin; and a compatibilizer and/or adhesion promoter, such as a solid silane, or as otherwise described below. As would be understood to a person of skill in the art, master batch A should contain as much polyolefin and adhesion promoter as necessary for compatibilization with the solid epoxy resin, with the goal being as much solid epoxy resin as possible, as a percentage (by weight) of the overall master batch A. In preferred embodiments, all of the components of master batch A are in solid form.

Thus at least one of the polyolefin used in master batch A has the function of being a compatibilizer copolymer, for compatibilizing the epoxy to polyolefin.

Polyolefins and modified polyolefins useful as compatibilizer copolymers in master batch A of the present invention are well known to those of ordinary skill in the art.

Examples of modified polyolefins include polyethylene grafted with maleic anhydride wax such as Licocene (trade-mark) PE-MA 4351 available from Clariant International Ltd., Muttenz, Switzerland or Ovevac (trade-mark) 18365S available from Arkema Inc., Philadelphia, Pennsylvania, U.S.A. and polyethylene grafted with maleic anhydride moieties such as Fusabond (trade-mark) EMB265D or M603, available from Dupont Company, Wilmington, Delaware, U.S.A., Amplify (trade-mark) grade GR204 available from Dow Chemical Company, Midland, Michigan, U.S.A. and A-C 573A available from Honeywell, Morristown, New Jersey, U.S.A. Further examples include copolymers of ethylene and acrylic acid such as Primacor (trade-mark) 3150 from Dow, or A-C 540 from Honeywell, or of ethylene and methacrylic acid, such as Nucrel (trade-mark) 599 available from Dupont Company. Still further examples include terpolymers for example a terpolymer of ethylene, acrylic ester and maleic anhydride such as Lotader (trade-mark) 4210, or a terpolymer of ethylene-methylacrylate and glycidyl methacrylate such as Lotader AX 8840, both from Arkema Inc.

While polyethylene is greatly preferred for use as a polyolefin in master batch A, other polyolefins, homopolymers and copolymers thereof known to confer resistance to moisture penetration can of course be used. Examples of suitable polyolefins are well known to those skilled in the art and include polypropylene, ethylene-propylene copolymers, and copolymers based on ethylene-butene, ethylene-hexene, ethylene-octene and the like.

Examples of suitable curable epoxy resins in solid form include but are not restricted to resins produced from the reaction of epichlorohydrin and bisphenol A such as DER 6155, 664UE and 667E all from DOW Chemicals and EPON 1004F and 2005 from Hexion Specialty Chemicals Inc. Houston, Texas. Curable epoxy resin produced from the reaction between a liquid epoxy resin and bisphenol A such as EPON 1007F from aforementioned Hexion may also be used. Furthermore, curable novolac modified solid epoxy resins such as DEN 438 and DEN 439 from DOW Chemicals or curable solid resins containing epoxy phenolic novolac such as EPON 2014 can also be used. Further, blends of one or more of solid epoxy resins or those containing bisphenol F and cresol moieties may be employed. Preferably, a solid epoxy resin is used.

In certain embodiments, master batch A may also comprise coloring agents, such as black polyethylene-based masterbatch, to readily distinguish it from master batch B or other components or competitor products in the field, and to further stabilize the coating. In certain preferred embodiments, master batch A may also comprise a grafted polyethylene, and/or a UV stabilizer. In certain embodiments, master batch A may comprise over 50%, preferably over 55% by weight, more preferably over 58% by weight of solid epoxy resin. In certain embodiments, master batch A may comprise between 20-40% of polyethylene, preferably 20-30%, most preferably about 25% polyethylene. In certain embodiments, master batch A comprises between 0.1-1% by weight of a solid adhesion promoter powder. In certain embodiments, master batch A comprises 10-15% of grafted polyethylene.

To promote compatibilization, it is desirable that the polyethylene and the solid epoxy resin in master batch A have similar melting points. For example, it is desirable that the polyethylene and the solid epoxy resin in master batch A both have a melting point between about 115 and about 130°C.

In a preferred embodiment, master batch A comprises about 25% polyethylene (Novacor RMS-539, Nova Chemicals, Alberta, Canada), about 12% grafted polyethylene (Fusabond M603, DuPont), about 0.5% adhesion promoter powder, about 60% solid epoxy resin (D.E.R. 6155), and about 2.5% black polyethylene-based masterbatch (19717, Ampacet, Tarrytown, NY).

To make master batch A, all of the components are mixed thoroughly and compounded together in a hot melt extruder. The resultant extrudate is a blended product which can be formed into pellets.

### Master Batch B

In one form of the present invention, one of the master batches, "master batch B", may comprise: polyolefin (preferably polyethylene); filler; a curing agent suitable for curing the epoxy resin of master batch A; and an adhesion promoter/compatibilizer such as a silane. In preferred embodiments, all components are in solid form.

As would be understood to a person of skill in the art, master batch B should contain as much polyolefin and adhesion promoter as necessary for compatibilization with the filler, with the goal being as much filler as possible, as a percentage (by weight) of the overall composition. In certain embodiments, as described further below, master batch B also contains sufficient curing agent for the curing of the epoxy resin of master batch A in a desirable amount of time, when combined with it. Note that, in certain embodiments, the adhesion promoter/compatibilizer, when present in sufficient amounts, can act as a curing agent for the epoxy resin of master batch A; accordingly, a discrete curing agent is not required.

Curing agents are also not required in master batch B where the coating composition utilizes three master batches (master batches A, B, and C). In two master batch embodiments, master batch A and master batch B are combined with a locally sourced polyolefin and optionally an adhesion promoter to make the coating composition of the invention. However, in certain cases, it is desirable to have the curing agent as part of a third master batch, i.e. master batch C. Thus, in embodiments utilizing a master batch C, it follows that master batch B will not contain a curing agent, since the curing agent would instead be found in master batch C.

Polyolefins and modified polyolefins useful as compatibilizer copolymers in master batch B of the present invention are well known to those of ordinary skill in the art, and are as described above for master batch A.

Examples of suitable curing agents include thermally latent curing agents well known to those of ordinary skill in the art and, as will be apparent to one skilled in the art, are preferably selected taking into consideration the residence time and temperature profile in the compounding equipment. Examples of such suitable curing agent are cyanoguanidines (commonly known as DICY) available from CVC Speciality Chemicals Inc under the trade name DDA 10 or from Air Products and Chemicals Inc, Allentown PA, under the trade name Amicure CG 1200. Hydrazide compounds and hydrazines such as adipic acid dihydrazides (ADH) and isophtalic dihidrazide (IDH) both available from A&C Catalysts inc. Linden NJ, phenolic hardeners such as the DEH line of products (DEH 85) from DOW chemicals anhydrides such as methyl hexahydrophtalic anhydride, nadic methyl anhydride and methyl tetrahydrophtalic anhydride, available from Dixie Chemical Company Inc. Houston TX can also be used as curing agents. Aliphatic and aromatic primary and secondary amines and their reaction products with epoxy resins, which are well known to act as curing agents for epoxy resins and need not be discussed in detail herein, may also be employed.

As noted above the function of the filler in the master batch B is to improve the physical properties of the coating composition, especially its impact resistance, hardness, and shrinkage (i.e. reduction of shrinkage). Suitable fillers that may be used in the above described composition for this function are well known to those skilled in the art and include calcium carbonate, calcium sulfate, barium sulfate, clays, for example montmorillonite and bentonite, glass beads and bubbles, chopped glass fibres, microbeads, and mica, silica, feldspar and calcium metasilicate also known as wollastonite.

In certain embodiments, master batch B may also comprise coloring agents, such as black polyethylene-based masterbatch, to readily distinguish it from master batch A in the field. Of course, as would be evident to a person of skill in the art, the concentration or addition of black masterbatch should be different in master batch A as compared to master batch B, so that the color of each master batch is different from the other, for easy differentiation in the field. In certain embodiments, master batch B may also comprise a grafted polyethylene and/or UV stabilizer. In certain embodiments, master batch B may comprise over 50%, preferably over 55% by weight, more preferably over 60% by weight, even more preferably over 65% by weight, of filler. In certain embodiments, master batch B may comprise between 20-40% of polyethylene, preferably 20-30%, most preferably about 28% polyethylene. In certain embodiments, master batch B comprises between 0.5-1.5% by weight of a solid adhesion promoter powder. In certain embodiments, master batch B comprises 1-5% of grafted polyethylene. In certain embodiments, master batch B comprises between 0.5-1.5% by weight of a UV stabilizer. In certain embodiments, master batch B may comprise enough curing agent for the epoxy resin of master batch A. In certain embodiments, master batch B comprises about 1% by weight of curing agent.

To promote compatibilization, it is desirable that the polyethylene and the filler powder in master batch B have similar physical and chemical affinity and that the polyolefin readily wet the filler and provide sufficient fluidity to the master batch. It is also desirable that the polyolefin used in master batch B be compatible with the polyolefin used in master batch A, for example, the two polyolefins should have similar melt indexes, similar melting points, and should blend well together. In preferable embodiments, the same polyolefin is used in both master batch A and master batch B.

In a preferred embodiment, master batch B comprises 20-30%, for example, about 25% polyethylene (Novacor RMS-539, Nova Chemicals, Alberta, Canada), 1-4%, for example, about 2% grafted polyethylene (Fusabond M603, DuPont), 55-75%, for example about 65% filler powder (Wollastonite NYAD-400, NYCO, NY, USA), 0.5-1.5%, for example about 0.8% UV stabilizer (Tinuvin 144, BASF), 0.5-1.5, for example, about 1% adhesion promoter powder, and 0.5-1.5, for example, about 1% curing agent (dicyandiamide Omnicure DDA-10, CVC Thermoset Specialities, NJ, USA) (all percentages by weight).

To make master batch B, all of the components are mixed thoroughly and compounded together in a hot melt extruder, which extrudes the blended product into pellets.

### Master Batch C

In certain embodiments, it is preferable to separate the curing agent into a separate master batch, "master batch C". In coating compositions utilizing a master batch C, the corresponding master batch B will not contain a curing agent. Coating compositions utilizing a master batch C are advantageous since a different master batch C can be selected by the user from an inventory having different concentrations or types of curing agent, depending on ambient conditions, such as temperature, humidity, etc., at the geographic location the coating is to be performed. Thus, the master batches A and B can remain constant, with master batch C selected for the desired curing agent. This results in a lower inventory requirement for master batches A and B, which is desirable, since the bulk of the cost and weight typically resides in master batches A and B.

Master batch C compositions thus comprise a polyolefin and a curing agent. It is desirable that the polyolefin of master batch C has similar melting point and melting index as the polyolefin used in master batches A and/or B. In preferred embodiments, the same polyolefin or polyolefin blend is used in all three of the master batch compositions. Master batch C compositions may comprise up to 50% curing agent. In preferred embodiments, master batch C compositions comprise about 30%, for example, 15-30%, of curing agent, the remainder being polyolefin. Example of suitable curing agents for master batch C compositions are as described above for master B.

### Coating Compositions

One advantage of the present master batch compositions A and B is that they do not require a liquid compatibilizer to incorporate the filler/epoxy to the polyethylene.

While the above-described master batches may in one form advantageously be provided as a dry blend of the components in fine particulate form suitable for spray application, in a preferred form, the composition is melt processed to provide a pelletized, solid, preferably substantially homogeneous blend having all of the components substantially uniformly distributed therein. In the above-described master batches, the epoxy resin is provided in solid form, rather than in the form of a liquid epoxy resin as in the U.S. patents to Mathur and Perez et al and in the Perez et al WO publication mentioned above. Whereas, in the proposals using liquid epoxy, higher temperatures are required in order to further polymerize the liquid epoxy, for example, to form an interpenetrating network, in the above described composition lower temperatures may be employed when blending the composition since there is no need to polymerize the epoxy (or to form an interpenetrating network) and, accordingly, polyethylene, one or more polyethylene copolymers, or a mixture thereof, may be employed in the polyolefin-containing component, since relatively lower processing temperatures are used.

In the preferred form, in order to avoid an excessive tendency for one component or the other to separate out from the blend, when subjected to compounding and melt processing, it is preferred that, in master batch A, a substantial portion of the polyolefin has its melting point closely matched to that of a substantial portion of the curable epoxy resin in solid form. Similarly, it is preferred that, in master batch B, (and, where used, master batch C), a substantial portion of the polyolefin has its melting point closely matched to that of a substantial portion of the polyolefin of master batch A.

In the preferred form, as noted above, at least 50% by weight of each of the polyolefin and the curable epoxy resin in solid form (in master batch A) exhibit melting point differences within the preferred maxima described above. Compositions having less than 50% of the polyolefin containing component or of the curable epoxy resin in solid (in master batch A) exhibiting melting point differences within the preferred maxima provide coatings that are acceptable for some applications. However, they tend to exhibit a higher degree of heterogeneity as a result of somewhat increased phase separation between the polyolefin, polyolefin copolymer, and epoxy moieties (in the case of master batch A). More preferably, the polyolefin-based portion and the epoxy-based portion conforming to above preferred maximum melting point differences are at least 60% by weight, still more preferably at least 70% by weight, even more preferably at least 80% by weight, and most preferably at least 90% by weight.

In some compositions in accordance with the invention, the polyolefin and/or the curable epoxy resin component comprise a mixture of polymers, for example the polyolefin comprises a mixture of different polyolefin-based polymers, or the curable epoxy resin comprises a mixture of different curable epoxy resins in solid form. In such case, it is preferred that at least 50% by weight of the respective component has its melting points within the parameters mentioned above in comparison to the melting points of the other component.

In the preferred form, master batches A, B and C are provided in a dry form, substantially wholly free of solvent. In this instance, "solvent" refers to a solvent that is liquid at room temperature, i.e., at 20°C. The presence of solvents tend to result in undesired porosity in the eventual coating, as a result of pores formed by evaporation of the solvent during or after completion of the coating procedure.

More preferably, in order to facilitate application of the coating composition, to make each of master batches A, B, and C the respective ingredients thereof are compounded together to make a flowable mixture. In a preferred form the flowable mixture forms a substantially homogeneous blend. The substantially homogenous blend is extruded into pellets. It is important to note that the ingredients blend, but because polymerization occurs before the ingredients are ever in contact with one another, an interpenetrating network is not created.

The procedures used for blending together meltable polymeric components at elevated temperature, for example to form a substantially homogeneous blend, are well known to those skilled in the art and need not be described in detail herein. Examples of suitable procedures are described in the above-mentioned Mathur U.S. patent 5,198,497.

The three master batches (master batch A, B, and C, as described above) are reasonably inert, and stable at room temperature and within a fairly large temperature range for extended periods of time. Thus they can be made at a centralized factory, and shipped to a job site where it is desired to coat a pipe. Once at the job site, it is very easy to mix appropriate amounts of the two master batches, (or, where appropriate, three master batches) add polyolefin, preferably locally-sourced polyolefin, more preferably, locally-sourced polyethylene in pellets of similar size to the pellets of the master batches. The locally-sourced polyolefin preferably has a melt index and/or melting points similar to the polyoleflns used in the master batches, more particularly, the locally-sourced polyolefin preferably has a melt index of 3-6 g/10 min at 190°C. Similarly to the relationship between master batches A and B, described above, in the preferred form, in order to avoid an excessive tendency for one component or the other to separate out from the coating composition when subjected to compounding and melt processing, it is preferred that, in the locally sourced polyolefin, a substantial portion of the polyolefin has its melt index closely matched to that of master batches A, B, and, where utilized, C. Preferably, the melt index difference between the said substantial portion of the locally sourced polyolefin and master batches A, B and/or C is less than 40%, more preferably less than 20%. In an even more preferred embodiment, the composition of the locally sourced polyolefin and the polyolefin used in master batches A, B, and C are the same.

Optionally, and preferably, a solid adhesion promoter/compatibilizer may also be added, for example, a polyethylene grafted with maleic anhydride, such as fusabond.

The components (master batch A, master batch B, optionally master batch C, polyolefin, and optionally an adhesion promoter) can be thoroughly mixed quite easily using known methods, for example, in a cement mixer or tumble blender, then run through a standard, prior art, hot melt extruder, running at an appropriate melt temperature, for example, about 170-190°C. This provides a substantially homogeneous coating composition, suitable for coating pipe, with very little to no phase separation or heterogeneity. The melted coating composition can be applied to a pipe or other object which is desired to be coated, using known means, for example, by conventional crosshead extrusion or side wrap procedures. The coating composition is then allowed to cool and solidify on the pipe or other substrate to form a protective coating thereon.

Alternatively, the coating composition can be solidified, pulverized to fine particle size and spray applied to a substrate, using known methods.

In preferred forms of the present invention, the compositions thus applied provide excellent protective properties, including excellent resistance to moisture penetration (provided by the polyolefin component), enhanced corrosion resistance and adhesion to the pipe (provided by the epoxy component), and excellent resistance to damage to the coating caused by impact, increased hardness, and decreased coating shrink-back (provided by the filler).

In certain preferred forms, the percentage by weight of each component in the coating composition is: master batch A: 15-20%, preferably about 17%; master batch B: 25-35%, preferably about 30%; locally sourced polyethylene: 45-55%, preferably about 50%; and adhesion promoter/compatibilizer: 2-5%, preferably about 3%.

In other preferred forms, where a master batch C is used, the percentage by weight of each component in the coating composition is: master batch A: 15-30%, preferably about 15%; master batch B: 18-42%, preferably about 42%; master batch C: 2-5%, preferably about 3%; locally sourced polyethylene: 35-60%, preferably about 38%; and adhesion promoter/compatibilizer: 2-6%, preferably about 2%.

Following application of the coating composition of the invention, the coating, which remains curable by virtue of the presence of the curable epoxy resin component and curing agent, may be further cured by for example heating or may be allowed to cure at ambient temperature. In order to shorten curing times, the composition, more specifically, the master batch B or C components of the composition, may include a cure accelerator for the epoxy resin. Example of such cure accelerators are: aromatic substituted ureas such as U24M from CVC Speciality Chemicals Inc, Amine adducts such as EPIKURE P-101 from Hexion Specialty Chemicals Inc. Houston, Texas and imidazoles such as IMICURE AMI-1 from Air Products and Chemicals Inc.

The coating composition can be sold in a kit form, the kit comprising master batch A, master batch B, and optionally master batch C, either in separate containers or pre-mixed, and either in pre-measured amounts or in bulk; and instructions for combining the master batches A and B (and, where appropriate, C) with a polyolefin, preferably a locally-sourced polyolefin, more preferably a locally-sourced polyethylene; and optionally an adhesion promoter. The instructions would include directions for mixing the pellets to form a relatively homogeneous mix, then melting the pellets together to form the coating composition. Optionally, the kit could also comprise the adhesion promoter, either in bulk, or in a pre-measured amount. Optionally, the kit could also include the polyolefin, either in bulk, or in a pre-measured amount. In one embodiment, the kit would contain all the components, pre-measured and ready to combine, melt, and extrude at the job site. Alternatively, the kit could include directions indicating the proper weight ratios of each master batch etc. to prepare the coating composition, as otherwise detailed herein. In certain embodiments, instead of or in addition to being part of the kit, master batch C could be sold separately.

The coating compositions of the present invention are intended to provide superior performance to previously known single layer FBE coatings, at a cost that is competitive with the cost of a single layer FBE coating.

Specifically, preferred embodiments of the present invention are intended to provide performance improvements over single layer FBE in improved resistance to moisture permeation and damage caused by impact. It can also be applied on a substrate as a single layer with acceptable properties for most applications.

As compared with the HPCC coating, preferred embodiments of the present invention are intended to be less expensive while providing a simplified application method.

One advantage of preferred embodiments of the present invention is that a large part, for example, about 50% by weight, of the coating, can be locally sourced polyolefin. This reduces costs significantly, for example, the costs of transporting the coating, where coating of pipes is done *in situ.*

A further advantage of certain preferred embodiments of the present invention is that, on site, coating the composition on a pipe can be performed utilizing very simple, readily available, one-part, low temperature extruders, through the use of pre-prepared master batches.

### Method of coating

As noted above, the specification also discloses a new method for coating a metallic article. The method enables, for instance, the coating of a metallic elongate article, such as a steel pipe used in oil, gas and water pipeline, with a crosslinked, or partially crosslinked, polyolefin coating that provides excellent moisture, impact, and corrosion resistance. The entire coating process can be performed "in-line", in a series of steps in the same manufacturing facility, for example, in the same pipe conveying apparatus.

The process includes the steps of applying a crosslinkable polyolefin to the exterior surface of the pipe, crosslinking the polyolefin *in situ,* through the application of one or more source of energy such as a source of infra-red energy, then rapidly cooling the coating. The method provides ease of application of the polyolefin, since it is applied in a non-crosslinked form, and thus can be applied at a relatively low temperature, which is still hot enough to melt the non-crosslinked form. The method also provides the excellent, hard, durable and impact and moisture resistant surface of a cross-linked polyolefin. The method provides ease and low cost, since the crosslinking process can (optionally) occur before the coating has time to cool.

The application of the crosslinkable polyolefin can be, for example, through a hot melt extrusion process, wherein the crosslinkable polyolefin is heated, then extruded at a temperature of about 180°C or lower, onto the pipe, using a flat die, or alternatively a circular die surrounding the pipe. In this manner, an even coating of hot, melted, crosslinkable polyolefin is applied to and coats the pipe. The pipe may have been previously treated or coated. For example, the pipe may have been previously coated with a fusion bonded epoxy or liquid epoxy, or an adhesive, or both an epoxy and an adhesive, either as a laminate or a blend. In the case of a flat die, the die can rotate around the pipe, or in alternative configurations, the pipe itself could be rotating as it passes the die.

The term "crosslinkable", when utilized herein, means a non-crosslinked or partially crosslinked material that can be further crosslinked through the application of an energy, such as infra red heat, gamma radiation, UV light, or electron beam exposure, or a combination thereof.

The term "crosslinked", when utilized herein, means a partially or fully crosslinked polyolefin material. The crosslinking can be uniform, wherein the entire bulk of the polymer has about the same cross-link density, or non-uniform, for example, a gradient crosslink, where the portion of the crosslinked material closest to the pipe has less cross-link density than the material furthest from the pipe. For example, a form of energy that does not go through the entirety of the coating can be utilized, to form a gradient crosslink.

The source of energy used can be any source of energy which results in an increase in the cross-link density of the crosslinkable polyolefin. For example, the source can be a source of infra-red energy, a source of ultra-violet energy, an electron beam, a source of microwave energy, an induction coil, a source of hot air, or even a standard convection oven. A combination of sources can also be used. For example the source of energy can be an infra red heating element. The infra red heating element, such as an infrared gun, is configured to heat the coating to above 200°C, typically to 220-240°C, preferably 220-225°C for 5-30 seconds.

In one embodiment, the method is provided with a temperature detector to detect the temperature of the coating composition, to ensure that the temperature is maintained in the range as required by the application requirements, for crosslinking the polyolefin. In a further embodiment, a feedback loop can be provided, along with appropriate controls. The feedback loop connects the temperature detector with the source of energy. While the controls allow the source of energy to be manipulated to ensure that the crosslinking process of the coating composition is maintained in an appropriate range, as required by the application requirements and the components used.

In a further embodiment in accordance with the specification, cooling or rapid cooling can also be performed. The rapid cooling can be a cold water quenching, either by applying a stream of water to the outside of the coated pipe, and/or to its inside. In certain embodiments, the stream of water is a laminar flow of water on the outside of the pipe. Use of such a laminar flow of water decreases surface imperfections caused by the water when cooling the hot polyolefin surface.

In many embodiments, the exterior surface of the elongate metallic article can be cleaned before application of the crosslinkable polyolefin. The cleaning can be to remove surface dirt, sand, or rust, and can include a hot water wash, blasting and/or acid washing the surface. Acid washing can be done with phosphoric acid at a concentration of 4-15%, typically 5%, with a dwell time from 15-30 seconds, followed by rinsing with high pressure (8273.709 kPa (1200 psi) minimum) deionized water to ensure no residual acid is left on the surface of the pipe. Preferably, the cleaning is also done in-line, immediately before the application of crosslinkable polyolefin, or immediately before the application of the first coating onto the metallic surface, where there is a coating between the metallic surface and the crosslinkable polyolefin, as described further, below.

Preferably, the surface of the pipe is also heated immediately prior to the application of the crosslinkable polyolefin coating (and/or immediately before the application of the first coating onto the metallic surface, where there is a coating between the metallic surface and the crosslinkable polyolefin, as described further, below). The heating of the pipe allows the hot melted crosslinkable polyolefin to better bond to the pipe surface, and prevents localized cooling and setting of the crosslinkable polyolefin as it hits the pipe surface. Preferably, the pipe is heated to an external surface temperature of 220-240°C, though a lower pre-heat temperature, for example, 160°C - 220°C, may also be desirable for certain applications, for example, with the use of a low application temperature fusion bonded epoxy (LAT FBE) layer as the first coating.

In certain embodiments, it is desirable to have a multi-layer coating on the metallic pipe, with the crosslinked polyolefin coating being the external coating and surface of a laminate. For instance, it may be desirable to apply an anti-corrosion layer, for instance, an epoxy coating layer, which may be a fusion bonded epoxy or a liquid epoxy, to the exterior surface of the pipe before the application of the crosslinkable polyolefin. This may be done, again, in-line, by painting or spraying a liquid epoxy, or spray coating a fusion bonded epoxy, to the hot pipe, using conventional methods, preferably 10-20 seconds before application of the crosslinkable polyolefin (or the adhesive layer, as described further, below). For spray coating, the pipe should be hot, for example, 220-240°C for a traditional fusion bonded epoxy, or 160-220°C for a LAT FBE coating.

Instead of, or in addition to, the epoxy coating, it may be desirable to apply an adhesive layer as part of the laminate, either between the epoxy coating and the crosslinked polyolefin coating, or between the metal of the pipe and the crosslinked polyolefin coating in embodiments that do not include the epoxy coating layer. Here, again, the adhesive layer may be extruded or sprayed onto the exterior surface of the pipe (or onto the epoxy coating, as appropriate), in line, using conventional methods, immediately before application of the crosslinkable polyolefin. The use of an adhesive layer is particularly advantageous where there is a spiral weld on the metallic pipe.

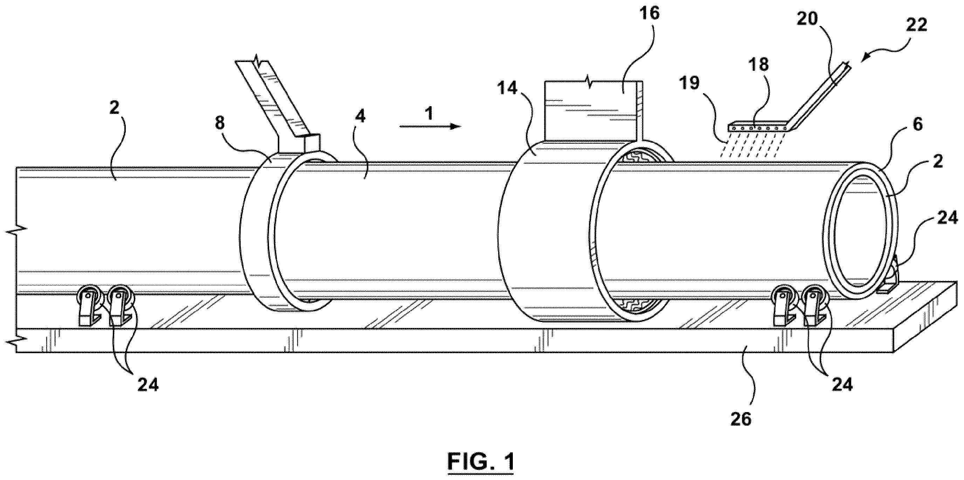

Figure 1 shows a schematic of an apparatus performing an embodiment of the method. A metal pipe 2 is conveyed in direction 1 along a conventional conveying assembly, comprising a conveyor frame 26 and conveying wheels 24. In this particular embodiment, the metal pipe is conveyed without significant rotational movement. Pipe 2 is conveyed through a circular extrusion die 8 through which a flow of melted, non-crosslinked polyolefin 12 is extruded, onto the surface of the pipe 2 to form a non-crosslinked polyolefin coating 4. Pipe 2 is then conveyed through an infra-red heater 14 mounted on infra-red heater frame 16 and surrounding the pipe 2. The infra red heater 14 applies infra-red energy for 5-25 seconds to the non-crosslinked polyolefin coating 4, cross-linking it to form cross-linked polyolefin coating 6. The pipe 2 having cross-linked polyolefin coating 6 is then conveyed through water dispensing system 18 which dispenses cool water 19 onto the pipe 2, rapidly cooling the cross-linked polyolefin coating 6. It would be appreciated that the speed of the conveying of the pipe 2, the rate/speed of non-crosslinked polyolefin 12 extruded through the die 8, and the thickness of the opening in the die 8, will contribute to the thickness of non-crosslinked polyolefin coating 4. In addition, the speed of the conveying of the pipe 2, the amount, wavelength, and proximity of the energy transmitted by infra-red heater 14, and the length of the infra-red heater 14 will all contribute to the amount of cross-linking in cross-linked polyolefin coating 6. All these parameters can easily and readily be adjusted to obtain the desired pipe coating characteristics.

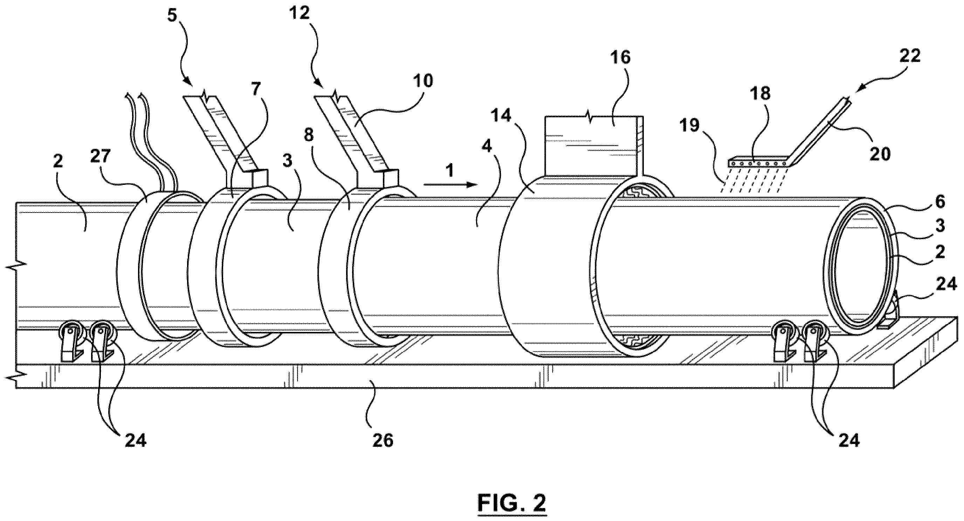

Figure 2 shows a schematic of an apparatus performing a further embodiment of the method. Metal pipe 2 is conveyed along a conventional conveying assembly, comprising a conveyor frame 26 and conveying wheels 24. In this particular embodiment, the metal pipe 2 is conveyed without significant rotational movement. Pipe 2 is conveyed through a pre-heater 27 which preheats the pipe to the required temperature. The pipe 2 is then conveyed through powder coater 7 which in turn is connected to a source of powdered fusion bonded epoxy 5. The powder coater 7 applies the powdered fusion bonded epoxy to the hot pipe 2 to form a fusion bonded epoxy coated pipe surface, or fusion bonded epoxy coating 3. The pipe 2 is then conveyed through a circular extrusion die 8 through which a flow of melted, non-crosslinked polyolefin 12 is extruded, onto the surface of the pipe 2 to form a non-crosslinked polyolefin coating 4. Pipe 2 is then conveyed through an infra-red heater 14 mounted on infra-red heater frame 16 and surrounding the pipe 2. The infra red heater 14 applies infra-red energy for 5-25 seconds to the non-crosslinked polyolefin coating 4, cross-linking it to form cross-linked polyolefin coating 6. The pipe 2 having cross-linked polyolefin coating 6 is then conveyed through water dispensing system 18 which dispenses cool water 19 onto the pipe 2, rapidly cooling the cross-linked polyolefin coating 6. It would be appreciated that the speed of the conveying of the pipe 2, the rate/speed of non-crosslinked polyolefin 12 extruded through the die 8, and the thickness of the opening in the die 8, will contribute to the thickness of non-crosslinked polyolefin coating 4. In addition, the speed of the conveying of the pipe 2, the amount, wavelength, and proximity of the energy transmitted by infra-red heater 14, and the length of the infra-red heater 14 will all contribute to the amount of cross-linking in cross-linked polyolefin coating 6. It would also be appreciated that the speed of the conveying of the pipe 2, and the rate at which FBE is sprayed onto the pipe by powder coater 7 will both contribute to the thickness of the fusion bonded epoxy coating 3. All these parameters can easily and readily be adjusted to obtain the desired pipe coating characteristics.

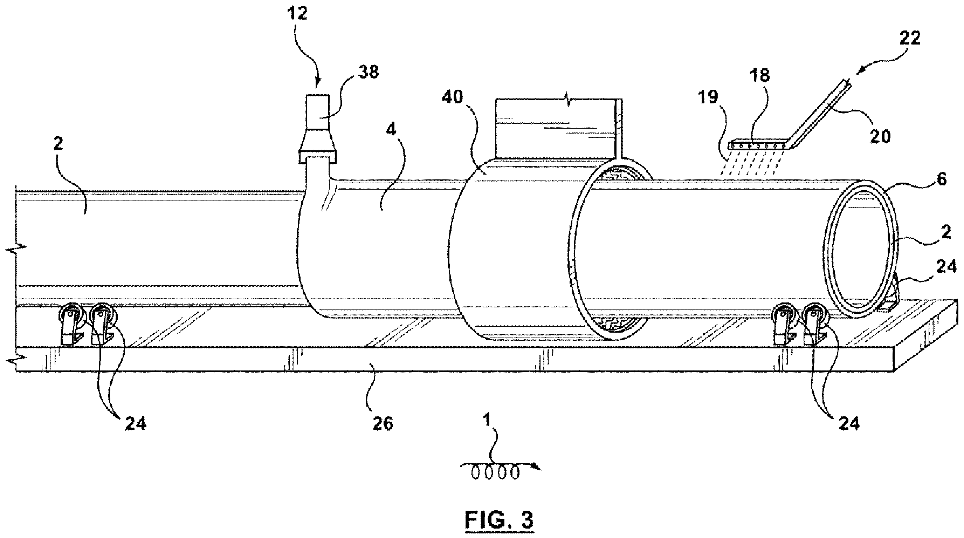

Figure 3 shows a schematic of an apparatus performing a further embodiment of the method. A metal pipe 2 is conveyed in direction 1 along a conventional conveying assembly, comprising a conveyor frame 26 and conveying wheels 24. In this particular embodiment, the metal pipe is conveyed both longitudinally and rotationally, i.e. the pipe rotates as it moves forward along the conveying apparatus. Pipe 2 is conveyed through a flat extrusion die 38 through which a flow of melted, non-crosslinked polyolefin 12 is extruded, onto the surface of the pipe 2. Since the pipe is rotating, the flow of melted, non-crosslinked polyolefin 12 forms a coating on the entire surface of pipe 2 - non-crosslinked polyolefin coating 4. Pipe 2 is then conveyed through an infra-red heater 40, which applies infra-red energy for 5-25 seconds to a portion of the non-crosslinked polyolefin coating 4, cross-linking it to form cross-linked polyolefin coating 6. The pipe 2 having cross-linked polyolefin coating 6 is then conveyed through water dispensing system 18 which dispenses cool water 19 onto the pipe 2, rapidly cooling the cross-linked polyolefin coating 6. It would be appreciated that the speed of the conveying and of the rotating of the pipe 2, the rate/speed of non-crosslinked polyolefin 12 extruded through the die 8, and the thickness of the opening in the die 8, will contribute to the thickness of non-crosslinked polyolefin coating 4. In addition, the speed of the conveying and the rotating of the pipe 2, the amount, wavelength, and proximity of the energy transmitted by infra-red heater 14, and the length of the infra-red heater 14 will all contribute to the amount of cross-linking in cross-linked polyolefin coating 6. All these parameters can easily and readily be adjusted to obtain the desired pipe coating characteristics.

It would also be appreciated that the additional elements as shown in figure 2 (pre-heater, powder coater, etc.) could also be utilized in a method with a rotating pipe as described in figure 3.

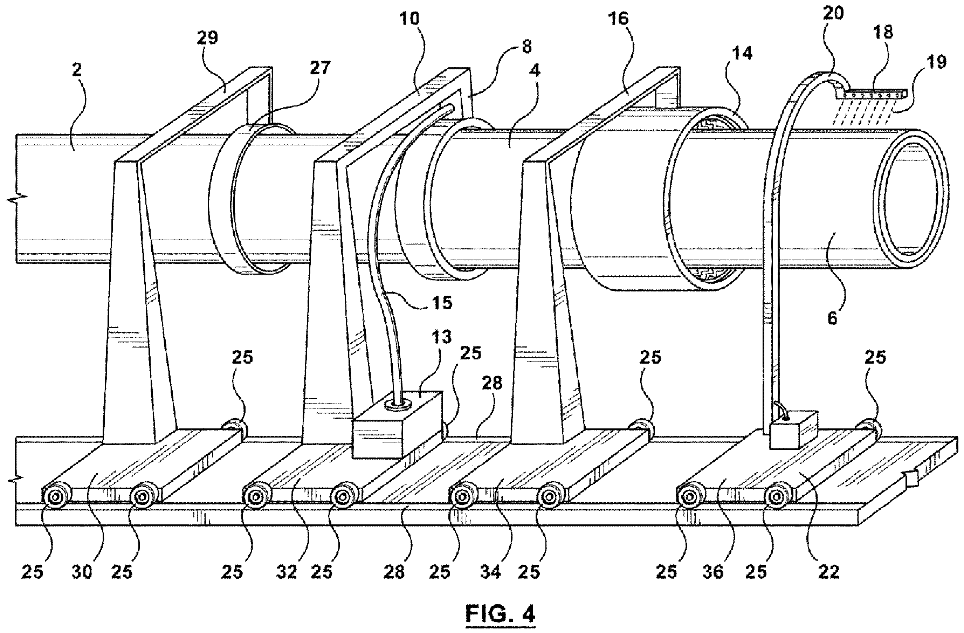

Figure 4 shows a schematic of an apparatus performing a further embodiment of the method. The embodiment shown in Figure 4 is of particular use in coating a pipe already in the field, or where the pipe is of a length that is unmanageable for conveying as described in the methods of Figures 1-3. In this method, the pipe remains stationary. A track 28 is placed proximal and generally parallel to the pipe. A plurality of carts (pre-heater cart 30, extruder cart 32, IR heater cart 34, and cooling cart 36) are placed on the track 28. The carts (30, 32, 34, 36) each comprise wheels 25 which allow displacement of the carts (30, 32, 34, 36) along the track 28. Thus the carts 30, 32, 34, 36 are displaceable along side of the length of the pipe 2, and generally parallel to it. Cart 30 is a pre-heater cart comprising pre-heater 27. Pre-heater 27 is mounted to an arm 29 and has two configurations, an open configuration, and (as shown) a closed configuration. Arm 29 can swivel and adjust. Thus, when pre-heater cart 30 is on track 28, pre-heater 27 can be mounted to surround pipe 2 and travel along pipe 2 when cart 30 is displaced along track 28. Likewise, extruder cart 32 comprises circular extrusion die 8 which can be configured to surround pipe 2 and through which a flow of melted, non-crosslinked polyolefin is extruded, onto the surface of the pipe 2 to form a non-crosslinked polyolefin coating 4. The extruder cart 32 also comprises an extruder 13 in which is placed non-crosslinked polyolefin, for plasticization. The hot, melted, non-cross-linked polyolefin is displaced from extruder 13 through circular extrusion die 8 through conduit 15. IR heater cart 34 likewise comprises infra-red heater 14, which is mounted to a frame 16 that is adjustable. Infra-red heater 14 has two configurations, an open configuration and (as shown) a closed configuration. Frame 16 can swivel and adjust. Thus, when IR heater cart 34 is on track 28, infra-red heater 14 can be mounted to surround pipe 2 and travel along pipe 2 when cart 34 is displaced along track 28. Finally, Figure 4 schematically shows cooling cart 36 which comprises water dispensing system 18 attached to arm 20. Water dispensing system 18 dispenses cool water 19 onto the pipe 2, rapidly cooling the cross-linked polyolefin coating 6. Also shown is water input 22.

As would be appreciated by a person in the art, the system shown in Figure 4 can be used in the field, on a pre-installed pipe. It can also be used on pipe lengths of non-standard size, for example, for coating small pipe lengths that would not otherwise fit on a conveying assembly of Figures 1-3, or curved or non-standard shaped pipes. As would be appreciated, although pre-heater 27, infra-red heater 14, and extrusion die 8 are shown having two configurations, for placement onto a pipe, this is an optional embodiment; a simpler apparatus can be made where these components only have one configuration (closed and as shown), and are placed on a pipe length by threading the end of the pipe through them.

As would also be appreciated by a person of skill in the art, the use of individual carts as shown in Figure 4 allows for a high amount of flexibility in the method. For example, a powder coating cart (not shown), configured to spray coat fusion bonded epoxy powder, could be placed between the pre-heater cart 30 and the extruder cart 32 in applications where a fusion bonded epoxy coating is desired. Alternatively, multiple processes can be integrated on one cart - for example, a single cart could have both the extrusion and the infra-red heater components.

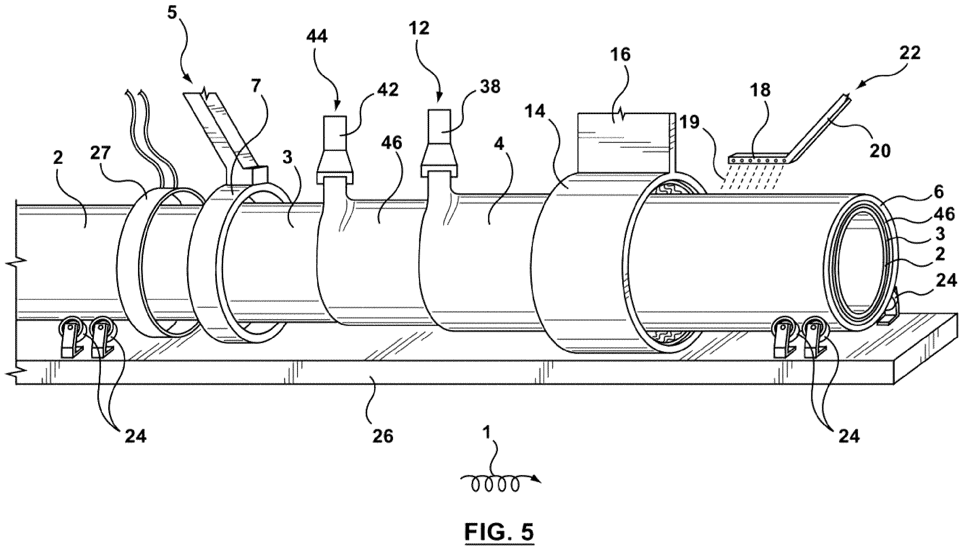

Figure 5 shows a schematic of an apparatus performing a further embodiment of the method. Metal pipe 2 is conveyed in direction 1 along a conventional conveying assembly, comprising a conveyor frame 26 and conveying wheels 24. In this particular embodiment, the metal pipe is conveyed both longitudinally and rotationally, i.e. the pipe rotates as it moves forward along the conveying apparatus. Pipe 2 is conveyed through a pre-heater 27 which preheats the pipe to the required temperature. The pipe 2 is then conveyed through powder coater 7 which in turn is connected to a source of powdered fusion bonded epoxy 5. The powder coater 7 applies the powdered fusion bonded epoxy to the hot pipe 2 to form a fusion bonded epoxy coated pipe surface, or fusion bonded epoxy coating 3. The pipe 2 is then conveyed through a spray coater 42 which is in turn connected to a source of adhesive 44. The spray coater 42 applies/extrudes the adhesive to the hot pipe 2 to form an adhesive coated pipe surface, or adhesive coating 46. The pipe 2 is then conveyed through a flat extrusion die 38 through which a flow of melted, non-crosslinked polyolefin 12 is extruded, onto the surface of the pipe 2. Since the pipe is rotating, the flow of melted, non-crosslinked polyolefin 12 forms a coating on the entire surface of pipe 2 - non-crosslinked polyolefin coating 4. Pipe 2 is then conveyed through an infra-red heater 14 mounted on infra-red heater frame 16 and surrounding the pipe 2. The infra red heater 14 applies infra-red energy for 5-25 seconds to the non-crosslinked polyolefin coating 4, cross-linking it to form cross-linked polyolefin coating 6. The pipe 2 having cross-linked polyolefin coating 6 is then conveyed through water dispensing system 18 which dispenses cool water 19 onto the pipe 2, rapidly cooling the cross-linked polyolefin coating 6. It would be appreciated that the speed of the conveying and of the rotating of the pipe 2, the rate/speed of non-crosslinked polyolefin 12 extruded through the die 38, and the thickness of the opening in the die 38, will contribute to the thickness of non-crosslinked polyolefin coating 4. In addition, the speed of the conveying and the rotating of the pipe 2, the amount, wavelength, and proximity of the energy transmitted by infra-red heater 14, and the length of the infra-red heater 14 will all contribute to the amount of cross-linking in cross-linked polyolefin coating 6. It would also be appreciated that the speed of the conveying and the rotating of the pipe 2, and the rate at which FBE is sprayed onto the pipe by powder coater 7 will both contribute to the thickness of the fusion bonded epoxy coating 3. It would additionally be appreciated that the speed and the rotating of the conveying of the pipe 2, and the rate at which adhesive is sprayed onto the pipe by spray coater 42, will contribute to the thickness of adhesive coating 46. All these parameters can easily and readily be adjusted to obtain the desired pipe coating characteristics.

### Example 1: Making a Variety of Crosslinkable Polyolefin Compositions for Use in Forming a Polyolefin Coating on a Pipe

Two, or, in certain embodiments, three, "master batch" compositions, as described below, can be mixed together, in situ, with locally sourced polyethylene, and optionally with an adhesion promoter, to form a blended coating composition. The mixture can then be extruded onto a pipe.

### (i) Manufacturing of master batch A

### (a) Polyethylene

Three "Master batch A" compositions, "MBA1", "MBA2", and "MBA3", respectively, were prepared, as follows.

A compounding machine (specifically, a ko-kneader or a single screw compounder with gravimetric feeders, though a twin screw extruder could also be used) was operated in such way that solid pellets of polyethylene, black master batch, and grafted polyethylene were fed into a gravimetric feeder at the beginning of the barrel. Roughly halfway down the barrel, in the direction of flow to the pelletizer, a second gravimetric feeder was used to feed approximately half of the epoxy flakes. A third and fourth gravimetric feeder, approximately 2/3 to ¾ of the way down, was used to feed the remainder of the epoxy flakes and the adhesion promoter powder with filler. The gravimetric feeders were Brabender feeders with twin, low shear screws for feeding powders, flakes and a single screw for feeding pellets, as appropriate.

The compositions prepared had the components and amounts described in Table 1, below. 226.796 kg (500 lbs) of each master batch A composition were prepared.

**Table 1**

| TYPE | Supplier | GRADE | MBA 1 | MBA 2 | MBA 3 |
|---|---|---|---|---|---|
| | | | Wt % | | |
| Polyethylene (Surpass) | Nova Chemicals | RMs-539U | 53.6 | 25.3 | 4 |
| Black master batch | Ampacet | 19717 | 2.6 | 2.7 | 5.0 |
| Grafted polyethylene | DuPont | Fusabond M603 | 8.0 | 11.8 | 15.0 |
| Adhesion promoter | Quadra | A-1100 DLC | 0.4 | 0.6 | 3.0 |
| Filler | Nyco Minerals | Nyad 400 | 0.4 | 0.6 | 3.0 |
| Bulk Solid epoxy resin | Dow | D.E.R. 6155 | 35.0 | 59.0 | 70.0 |

The bulk of the composition was composed of a bulk solid epoxy resin, to which a compatibilizer was added in the form of a grafted polyethylene.

Exiting from the compounder barrel, the compounded mixture was pelletized and cooled in an underwater pelletizer. Once cooled, the pellets were dried at about 75°C for about 3 hours, and stored in air-tight containers.

### (b) Polypropylene

Three Master Batch "A" compositions, "MBA 4", "MBA 5", and "MBA 6", respectively, are prepared similarly to the master batch A compositions prepared with polyethylene, above, but utilizing polypropylene as the polyolefin. Note that, since polypropylene is used instead of polyethylene, higher melting temperatures (relative to those required for (a), above) may be utilized.

The compositions prepared have the components and amounts described in Table 2, below. 226.796 kg (500 lbs) of each master batch A composition are prepared.

**Table 2**

| TYPE | Supplier | GRADE | MBA 4 | MBA 5 | MBA 6 |
|---|---|---|---|---|---|
| | | | Wt% | | |
| Polypropylene MI Range 0.9-10 | Borealis | HD915CF | 53.6 | 25.3 | 4.0 |
| Polypropylene Black master batch | Cabot | PP3585 | 2.6 | 2.7 | 5.0 |
| Grafted polypropylene | Arkema | Orevac 18732 | 8.0 | 11.8 | 15.0 |
| Adhesion promoter | Quadra | A-1100 DLC | 0.4 | 0.6 | 3.0 |
| Filler | Nyco Minerals | Nyad 400 | 0.4 | 0.6 | 3.0 |
| Bulk Solid epoxy resin | Dow | D.E.R. 6155 | 35.0 | 59.0 | 70.0 |

### (c) polyolefin blend

Three Master Batch "A" compositions, "MBA 7", "MBA 8", and "MBA 9", respectively, are prepared similarly to the master batch A compositions prepared with polyethylene, above, but utilizing a combination of polyethylene and polypropylene as the polyolefins.

The compositions prepared have the components and amounts described in Table 3, below. 226.796 kg (500 lbs) of each master batch A composition are prepared.

**Table 3**

| TYPE | Supplier | GRADE | MBA 7 | MBA 8 | MBA 9 |
|---|---|---|---|---|---|
| | | | Wt % | | |
| Polypropylene MI 0.9-10 | Borealis | HD915CF | 27.0 | 12.9 | 2.0 |
| Polyethylene (Surpass) | Nova Chemicals | RMs-539U | 26.6 | 12.4 | 2.0 |
| Black master batch | Cabot | PP 3585 | 2.6 | 2.7 | 5.0 |
| Grafted polyethylene | DuPont | Fusabond M603 | 4.0 | 5.9 | 7.5 |
| Grafted polypropylene | Arkema | Orevac 18732 | 4.0 | 5.9 | 7.5 |
| Adhesion promoter | Quadra | A-1100 DLC | 0.4 | 0.6 | 3.0 |
| Filler | Nyco Minerals | Nyad 400 | 0.4 | 0.6 | 3.0 |
| Bulk Solid epoxy resin | Dow | D.E.R. 6155 | 35.0 | 59.0 | 70.0 |

It is noted that the "blended" polyethylene/polyolefin compositions described in Table 3 all describe compositions where approximately 50% by weight of the polyolefin is polypropylene and approximately 50% of the polyolefin by weight is polyethylene. However, it would be understood and evident to a person of skill in the art that a wide range of polyethylene:polypropylene ratios could be used, and that other combinations of polyolefins could also be used at varying ratios, depending on the characteristics of the final product desired, without affecting the scope of the invention.

### (ii) Manufacturing of master batch B

### (a) Polyethylene

Three "Master batch B" compositions, "MBB 1", "MBB 2", and "MBB 3", respectively, were prepared, as follows.

A compounding machine, preferably a ko-kneader or a single screw compounder with four gravimetric feeders, (though a twin screw extruder could also be used) was operated in such way that solid pellets of polyethylene and grafted polyethylene were fed at the beginning of the barrel, and roughly halfway down the barrel, in the direction of flow to the pelletizer, a second gravimetric feeder was used to feed approximately half the filler powder, other powders and small particulates (adhesion promoter powder, UV stabilizer, and curing agent). A third and/or fourth gravimetric feeder, approximately 2/3 to ¾ of the way down, is used for the remaining filler powder, other powder and small particulates. The machine was preferably operated at a temperature of 170-190°C or less. The gravimetric feeders were of the Brabender type; twin screw, low shear feeders for powders and a single screw feeder for the pellets.

The compositions prepared had the components and amounts described in Table 4, below. 226.796 kg (500 lbs) of each master batch B composition were prepared.

**Table 4**

| TYPE | Supplier | GRADE | MBB 1 | MBB 2 | MBB 3 |
|---|---|---|---|---|---|
| | | | Wt % | | |
| Polyethylene (Surpass) | Nova Chemicals | RMs-539U | 46.1 | 28.55 | 12.5 |
| Filler powder (Wollastonite) | NYCO | NYAD-400 | 50 | 66.7 | 75 |
| Grafted polyethylene | DuPont | Fusabond M603 | 1 | 2 | 6.0 |
| Adhesion promoter powder | Natrochem Inc. | A-1100 DLC | 0.4 | 1 | 3.0 |
| UV Stabilizer (Tinuvin) | BASF | 144 | 2 | 0.8 | 0.5 |
| Curing agent (Dicyandiamide) | CVC Thermoset Specialities | Omnicure DDA-10 | 0.5 | 0.95 | 3 |

As shown, the bulk of the composition was composed of filler (Wollastonite), to which a compatibilizer was added in the form of a grafted polyethylene.

Exiting from the compounder barrel, the compounded mixture was pelletized and cooled down in an underwater pelletizer. Once cooled, the pellets were dried at 75°C for 3 hours and stored in air-tight containers.

### (b) Polyethylene, no curing agent

It was surprisingly found that certain adhesion promoters, when provided in suitable quantities, could provide enough amide to cure the epoxy of master batch A without the need for a separated, dedicated curing agent. This was desirable, inter alia, since it allowed for handling at higher temperature without the risk of affecting the curing agent since the curing agent need not be present. Accordingly, "master batch B" compositions with increased adhesion promoter, and lacking a more traditional curing agent, were prepared, as follows.

A compounding machine, preferably a Ko-kneader or a single screw compounder (though a twin screw extruder could also be used) was operated in a manner similar to that described above for (a).

The compositions prepared had the components and amounts described in Table 5, below. 226.796 kg (500 lbs) of each master batch B composition (master batch B 4, 5, and 6, respectively) were prepared.

**Table 5**

| TYPE | Supplier | GRADE | MBB 4 | MBB5 | MBB 6 |
|---|---|---|---|---|---|
| | | | wt % | | |
| Polyethylene (Surpass) | Nova Chemicals | RMs-539U | 46.1 | 28 | 13.5 |
| Filler powder (Wollastonite) | NYCO | NYAD-400 | 50 | 66.7 | 75 |
| Grafted polyethylene | DuPont | Fusabond M603 | | | 6.0 |
| Adhesion promoter powder | Natrochem Inc. | A-1100 DLC | 1 | 2.5 | 5.0 |
| UV Stabilizer (Tinuvin) | BASF | 144 | 2 | 0.8 | 0.5 |

Exiting from the compounder barrel, the compounded mixture was pelletized and cooled in an underwater pelletizer. Once cooled, the pellets were dried and stored in air-tight containers.

### (c) Polyethylene, for use with Master Batch C

As previously described, the methods and compositions can be used either with curing agent contained within master batch B, or with curing agent in a separate master batch C, as described below. For compositions utilizing a separate master batch C, it follows that master batch B would not require curing agent, or an excess of adhesion promoter/compatibilizer, as described above. Accordingly, master batch B preparations containing no dedicated curing agent were prepared as follows.

A compounding machine was used as described in example (a), above. The compositions prepared had the components and amounts described in Table 6, below. 226.796 kg (500 lbs) of each master batch B composition (master batch B 7, 8, 9, 9A and 9B, respectively) were prepared. In MBB 9A, Micro balloons (which could be replaced with glass microspheres or other similar material) were added as a replacement for a portion of the Filler and of the Polyethylene; in MBB 9B, micro balloons were added as replacement of a portion of the filler only. When mixed with the other master batches in proportion, it was found that micro balloons could be optionally or additionally added externally, also by side feeder in the ko kneader or twin screw extruder or modified single screw extruder with gravimetric feeders so as to obtain micro balloons in the range of 20 to 25% in the final product. It was found that the addition of micro balloons and/or glass microspheres in this manner resulted in the formation of a syntactic matrix, providing enhanced insulation properties for the coating.

**Table 6**

| TYPE | Supplier | GRADE | MBB | MBB | MBB | MBB | MBB |
|---|---|---|---|---|---|---|---|
| | | | 7 | 8 | 9 | 9A | 9B |
| | | | Wt % | | | | |
| Polyethylene (Surpass) | Nova Chemicals | RMs-539U | 46.6 | 29.5 | 15.5 | 30 | 48.35 |
| Filler powder (Wollastonite) | NYCO | NYAD-400 | 50 | 66.7 | 75 | 30 | ---- |
| Grafted polyethylene | DuPont | Fusabond M603 | 1 | 2 | 6.0 | 16.5 | 17.15 |
| Adhesion promoter powder | Natrochem Inc. | A-1100 DLC | 0.4 | 1 | 3.0 | 3 | 6 |
| Glass Beads/Micro balloons | 3M | S-38HS | | | | 20 | 25 |
| UV Stabilizer (Tinuvin) | BASF | 144 | 2 | 0.8 | 0.5 | 0.5 | 0.5 |

Exiting from the compounder barrel, the compounded mixture was pelletized and cooled down in an underwater pelletizer. Once cooled, the pellets were dried and stored in air-tight containers.

### (d) Polypropylene

Three "master batch B" compositions, "MBB 10", "MBB 11", and "MBB 12", respectively, were prepared in a manner similar to the examples above, but using polypropylene. As would be understood to a person of skill in the art, a higher operating temperature was required for polypropylene as compared to polyethylene.

The compositions prepared had the components and amounts described in Table 7, below. 226.796 kg (500 lbs) of each master batch B composition (master batch B 10, 11, and 12, respectively) were prepared.

**Table 7**

| TYPE | Supplier | GRADE | MBB 10 | MBB 11 | MBB 12 |
|---|---|---|---|---|---|
| | | | Wt % | | |
| Polypropylene MI 0.9-10 | Borealis | HD915CF | 47.6 | 28.55 | 11 |
| Filler powder (Wollastonite) | NYCO | NYAD-400 | 50 | 66.7 | 75 |
| Grafted polypropylene | Arkema | Orevac 18732 | 1 | 2 | 6.0 |
| Adhesion promoter powder | Natrochem Inc. | A-1100 DLC | 0.4 | 1 | 3.0 |
| UV Stabilizer (Tinuvin) | BASF | 144 | 0.5 | 0.8 | 2.0 |
| Curing agent (Dicyandiamide) | CVC Thermoset Specialities | Omnicure DDA-10 | 0.5 | 0.95 | 3 |

As shown, the bulk of the composition was composed of filler (Wollastonite), to which a compatibilizer was added in the form of a grafted polypropylene.

Exiting from the compounder barrel, the compounded mixture was pelletized and cooled down using an underwater pelletizer. Once cooled, the pellets were dried and stored in air-tight containers.

### (e) Polypropylene, no curing agent

It was surprisingly found that adhesion promoter, when provided in suitable quantities, could provide enough amide to cure the epoxy of master batch A. This was desirable, inter alia, since it allowed for handling at higher temperature without the risk of affecting the curing agent. Accordingly, "master batch B" compositions with increased adhesion promoter, and lacking curing agent, were prepared, as described above, but with the components shown below.

The compositions prepared had the components and amounts described in Table 8, below. 226.796 kg (500 lbs) of each master batch B composition (master batch B 4, 5, and 6, respectively) were prepared.

**Table 8**

| TYPE | Supplier | GRADE | MBB 13 | MBB 14 | MBB 15 |
|---|---|---|---|---|---|
| | | | Wt % | | |
| Polypropylene MI 0.9-10 | Borealis | HD915CF | 46 | 28 | 13.5 |
| Filler powder (Wollastonite) | NYCO | NYAD-400 | 50 | 66.7 | 75 |
| Grafted polypropylene | Arkema | Orevac 18732 | 1 | 2 | 6.0 |
| Adhesion promoter powder | Natrochem Inc. | A-1100 DLC | 1 | 2.5 | 5.0 |
| UV Stabilizer (Tinuvin) | BASF | 144 | 2 | 0.8 | 0.5 |

Exiting from the compounder barrel, the compounded mixture was pelletized and cooled down in an underwater pelletizer. Once cooled, the pellets were dried and stored in air-tight containers.

### (f) Polypropylene, for use with Master Batch C

As previously described, the methods and compositions can be used either with curing agent contained within master batch B, or with curing agent in a separate master batch C, as described below. For compositions utilizing a separate master batch C, it follows that master batch B would not contain curing agent. Accordingly, master batch B preparations containing no cure were prepared as described above, but with the composition described below.

The compositions prepared had the components and amounts described in Table 9, below. 226.796 kg (500 lbs) of each master batch B composition (master batches B 16, 17, 18, 19 and 20, respectively) were prepared. In MBB 19, similar to MBB9A, described above, Micro balloons (which could be replaced with glass microspheres or other similar material) were added as replacement for part of the Filler and of the Polypropylene; in MBB 20, similar to MBB9B, described above, micro balloons were added as replacement for a portion of the filler only. When mixed with the other master batches in proportion, micro bubbles it was found that micro balloons could be optionally or additionally added externally also by side feeder in the ko kneader or twin screw extruder or modified single screw extruder with gravimetric feeders so as to get micro balloons in the range of 20 to 25% in the final product. It was found that the addition of micro balloons and/or glass microspheres in this manner resulted in the formation of a syntactic matrix, providing enhanced insulation properties for the coating.

**Table 9**

| TYPE | Supplier | GRADE | MBB 16 | MBB 17 | MBB 18 | MBB 19 | MBB 20 |
|---|---|---|---|---|---|---|---|
| | | | Wt % | | | | |
| Polypropylene MI 0.9-10 | Borealis | HD915CF | 46.6 | 25.9 | 15.5 | 30 | 48.35 |
| Filler powder (Wollastonite) | NYCO | NYAD-400 | 50 | 70.0 | 75 | 30 | ---- |
| Grafted polypropylene | Arkema | Orevac 18732 | 1 | 2.15 | 6.0 | 16.5 | 17.15 |
| Adhesion promoter powder | Natrochem Inc. | A-1100 DLC | 0.4 | 1.1 | 3.0 | 3 | 6 |
| Glass Beads/Micro balloons | 3M | S-38HS | | | | 20 | 25 |
| UV Stabilizer (Tinuvin) | BASF | 144 | 2 | 0.85 | 0.5 | 0.5 | 0.5 |

Exiting from the compounder barrel, the compounded mixture was pelletized and cooled down in an underwater pelletizer. Once cooled, the pellets were dried and stored in air-tight containers.

### (g) Polyolefin blend

As would be understood to a person of skill in the art, polyolefin compositions of examples (a)-(f), above, could be made with a blend of polyolefins, instead of only polypropylene and/or polyethylene. For example, a blend of 50% (by weight) polyethylene and 50% polypropylene, or 75% polypropylene/25% polyethylene, or 25% polypropylene/75% polyethylene could be made using the similar techniques and otherwise similar ingredients as described above. Thus, Master Batch "B" compositions are prepared similarly to the master batch B compositions prepared with polyethylene, above, but utilizing a combination of polyethylene and polypropylene as the polyolefins.

It would be understood that a wide range of
polyethylene: polypropylene ratios could be used depending on the characteristics of the final product desired, without affecting the scope of the invention.

### (iii) Manufacturing of master batch C

### (a) Polyethylene

In certain cases, as described above, it is desirable to have a "Master batch C", containing only polyolefin and curing agent. This can be combined with master batches B (containing no curing agent) and master batch A, as described below. The advantage of having a separate "curing" master batch C is that different curing agents can easily be selected, simply by selecting a different master batch C. Different curing agents are desirable for different desired speed of curing, different ambient temperature conditions, etc.

"Master batch C" compositions were prepared, as follows.

A compounding machine, preferably a ko-kneader or a single screw compounder (though a twin screw extruder could also be used), was operated in such way that solid pellets of polyethylene were fed at the beginning of the barrel and roughly halfway down the barrel, in a gravimetric feeder, in the direction of flow to the pelletizer. Second and third gravimetric feeders halfway to 2/3rd down the barrel were used to feed premixed curing agent. The machine was preferably operated at a temperature of 170-180°C or less.

The compositions prepared had the components and amounts described in Table 10, below.

**Table 10**

| TYPE | Supplier | GRADE | MBC 1 | MBC 2 | MBC 3 |
|---|---|---|---|---|---|
| | | | Wt% | | |
| Polyethylene (Surpass) | Nova Chemicals | RMs-539U | 55 | 70 | 90 |
| Curing agent (Dicyandiamide) | CVC Thermoset Specialities | Omnicure DDA-10 | 30 | 15 | 5 |
| Filler | Nyco Minerals | Nyad 400 | 15 | 15 | 5 |

Exiting from the compounder barrel, the compounded mixture was pelletized and cooled down in an underwater pelletizer. Once cooled, the pellets were dried and stored in air-tight containers.

Similar polypropylene master batches C4, 5, and 6, are also made, substituting polypropylene for the polyethylene of Table 10.

Likewise, polypropylene/polyethylene blended master batch C compositions can be made, much as exemplified for master batches A and B, above.

### Example 2 - Manufacturing and application of a coating composition

### (a) Master batch A and B (no master batch C)

Master batches A and B, prepared as described above, were added to pellets of locally sourced polyethylene and an adhesion promoter powder (Fusabond) to form coating compositions "CC1", "CC2", "CC3" and "CC4" in the amounts shown in Table 11, below, to a total of 226.796 kg (500 lbs) of material:

**Table 11**

| Coating Composition | CC1 | CC2 | CC3 | CC4 |
|---|---|---|---|---|
| | % by weight | | | |
| Master batch A1 | 15 | 17 | 30 | 14 |
| Master batch B1 | 45 | 30 | 20 | 23 |
| Locally sourced polyethylene | 38 | 50 | 44 | 60 |
| Adhesion promoter | 2 | 3 | 6 | 3 |

The locally sourced polyethylene used had a melt index in the range of 3-6 grams/10 min at 190°C/2.16 kg load.

The four ingredients were mixed essentially to homogeneity, in solid form, using a cement mixer. The resultant mixture was then fed into a hot melt extruder, for melting and application onto a metal pipe length. The metal pipe length was cleaned and pre-heated to a temperature of 180-240°C, for example, 200°C, coated with a fusion bonded epoxy primer using known and conventional means, then the hot melted coating composition was applied by conventional crosshead or side extrusion, onto the outer surface. Immediately after coating, and in-line with it, the pipe coating was simultaneously cured and cross-linked by passing it through an infra red heater, which applied infra-red energy for approximately 5-25 seconds.

Similar coating compositions CC5, CC6, CC7, CC8, CC9, CC10 and CC11 are made, utilizing MBA 2 and MBA 3, as well as MBB 2, 3, 4, 5, and 6, for example as detailed in Table 12, below.

**Table 12**

| Coating Composition | CC5 | CC6 | CC7 | CC8 | CC9 | CC10 | CC11 |
|---|---|---|---|---|---|---|---|
| | % by weight | | | | | | |
| Master batch A2 | 15 | | 30 | | 15 | | 30 |
| Master batch A3 | | 17 | | 14 | | 17 | |
| Master batch B2 | 45 | | | | | | |
| Master batch B3 | | 30 | | | | | 20 |
| Master batch B4 | | | 20 | | | 30 | |
| Master batch B5 | | | | 23 | | | |
| Master batch B6 | | | | | 45 | | |
| Locally sourced polyethylene | 38 | 50 | 44 | 60 | 38 | 50 | 44 |
| Adhesion promoter | 2 | 3 | 6 | 3 | 2 | 3 | 6 |

Similarly, polypropylene coating compositions CC12-CC18 are made, using a similar protocol, mixing the batches according to the proportions found in Table 13, below:

**Table 13**

| Coating Composition | CC12 | CC13 | CC14 | CC15 | CC16 | CC17 | CC18 |
|---|---|---|---|---|---|---|---|
| | % by weight | | | | | | |
| Master batch A4 | 15 | | 30 | | 15 | | 30 |
| Master batch A5 | | 17 | | 14 | | 17 | |
| Master batch A6 | 45 | | | | | | |
| Master batch B10 | | 30 | | | | | |
| Master batch B11 | | | 20 | | | | |
| Master batch B12 | | | | 23 | | | |
| Master batch B13 | | | | | 45 | | |
| Master batch B14 | | | | | | 30 | |
| Master Batch B15 | | | | | | | 20 |
| Locally sourced polypropylene | 38 | 50 | 44 | 60 | 38 | 50 | 44 |
| Adhesion promoter | 2 | 3 | 6 | 3 | 2 | 3 | 6 |

### (b) Master batch A, B and C

Master batches A, B, and C, prepared as described above, are added to pellets of locally sourced polyethylene and an adhesion promoter powder (Fusabond) and Black Master batch to form coating compositions CC19-CC22 in the amounts shown in Table 14, below, to a total of 226.796 kg (500 lbs) of material:

**Table 14**

| Coating Composition | CC19 | CC20 | CC21 | CC22 |
|---|---|---|---|---|
| | % by weight | | | |
| Master batch A21 | 15 | 17 | 29 | 13 |
| Master batch B87 | 42 | 28 | 18 | 21 |
| Master batch C21 | 3 | 2 | 3 | 3 |
| Locally sourced polyethylene | 30 | 45.5 | 39 | 57 |
| Adhesion promoter | 2 | 3 | 6 | 3 |
| Black Master Batch | 8 | 4.5 | 5 | 3 |

The locally sourced polyethylene used had a melt index in the range of 3-6 grams/10 min at 190°C/2.16 kg load.

The five ingredients were mixed essentially to homogeneity, in solid form, using a tumble blender. The resultant mixture was then fed into a hot melt extruder, for melting and application onto a metal pipe length. The metal pipe length was cleaned and pre-heated to a temperature of 180-240°C, for example, 200°C, a coating of fusion bonded epoxy was added, and the hot melted coating composition was applied to the already pre-applied fusion bonded epoxy by conventional crosshead extrusion, onto the outer surface of the epoxy primer - coated pipe. Immediately after coating, and in-line with it, the pipe coating was simultaneously cured and cross-linked by passing it through an infra red heater, which applied infra-red energy for approximately 5-25 seconds.

Similar coating compositions CC23 - CC29 are made, utilizing MBA 2 and MBA 3, as well as MBB 2, 3, 4, 5, 6, and MBC 2 and 3, for example as detailed in Table 15, below.

**Table 15**

| Coating Composition | CC23 | CC24 | CC25 | CC26 | CC27 | CC28 | CC29 |
|---|---|---|---|---|---|---|---|
| | % by weight | | | | | | |
| Master batch A2 | 15 | | 25 | | 14 | | 28 |
| Master batch A3 | | 16 | | 12 | | 15 | |
| Master batch B8 | 40 | | 18 | | 43 | | |
| Master batch B9 | | 25 | | 20 | | 30 | 18 |
| Master batch C2 | 3 | | 3 | | 3 | | 4 |
| Master batch C3 | | 3 | | 5 | | 2 | |
| Locally sourced polyethylene | 38 | 50 | 44 | 56 | 32 | 42 | 38 |
| Adhesion promoter | 2 | 3 | 6 | 3 | 2 | 3 | 8 |
| Black Master Batch | 2 | 3 | 4 | 4 | 6 | 8 | 4 |

Similarly, polypropylene coating compositions CC30-CC36 are made, using a similar protocol, mixing the batches according to the proportions found in Table 16, below:

**Table 16**

| Coating Composition | CC30 | CC31 | CC32 | CC33 | CC34 | CC35 | CC36 |
|---|---|---|---|---|---|---|---|
| | % by weight | | | | | | |
| Master batch A4 | 15 | | | | 14 | | |
| Master batch A5 | | 16 | | 12 | | 15 | |
| Master batch A6 | | | 25 | | | | 28 |
| Master batch B16 | 40 | | | | 43 | | |
| Master batch B17 | | 25 | | 20 | | 30 | |
| Master batch B18 | | | 18 | | | | 18 |
| Master Batch C4 | 3 | | | | | 2 | |
| Master batch C5 | | | 3 | | 3 | | 4 |
| Master batch C6 | | 3 | | 5 | | | |
| Locally sourced Polypropylene | 38 | 50 | 44 | 56 | 32 | 42 | 38 |
| Adhesion promoter | 2 | 3 | 6 | 3 | 2 | 3 | 8 |
| Black Master Batch | 2 | 3 | 4 | 4 | 6 | 8 | 4 |

Similar polyethylene/polypropylene blend coating compositions are also made, utilizing master batch A7, 8, and 9, and the corresponding master batch B and/or C, similarly to the examples outlined above. Similar polyethylene/polypropylene blend coating compositions are also made utilizing the micro balloon - added formulas MBB9A, MBB9B, MBB19, and MBB20.

### Example 3: Coating a pipe

The coating compositions CC1-CC36 are used to coat a pipe according to the following method.

A metal pipe is pre-heated, blasted, then heated to an appropriate temperature for application of fusion bonded epoxy. For a traditional (powder form) coating of fusion bonded epoxy, this pre-heating is to 225-235°C. However, a liquid epoxy may be applied, in which case a preheat of 170-200°C is sufficient, leading to a significant cost and time savings. The pipe was then coated with epoxy, either by known spray powder coating methods (for powder form epoxy) or by spraying or spreading liquid epoxy (for liquid epoxy), using conventional and known procedure for such a coating. Any one of the coating compositions CC1-CC36, as described above, are made using the methodology described above, and extruded onto the outer surface of the hot, FBE-coated pipe length, by conventional crosshead extrusion or sheet die. The coating composition typically contacts the pipe within 3 - 20 seconds of the epoxy application. Typically, the pipe is about 185-190°C at the time of coating composition application onto a liquid epoxy-coated pipe, or about 225°C at the time of application onto a powder coated epoxy-coated pipe. The coating composition is then allowed to cool and solidify onto the epoxy coating. Cooling may be active, for example, by quenching with water. Curing of the coating composition is completed by an appropriate curing method based on the curing agent used. For example, for coating compositions CC1-CC18, the coated pipe length is heated at 190°C - 240°C, to accelerate curing, using an infra red heat source. Immediately after curing, and in-line with it, the pipe coating was cross-linked by passing it through an infra red heater, which applied infra-red energy.

Once the coating is complete, optionally, the coating can be further coated, for example, with an exterior impact coating of polyolefin or U.V. resistant coating, using known methods.

### Example 4: Properties of the Applied Coating

The properties of the coating applied on a pipe according to Example 3 were tested; the results summarized in Table 17 as follows:

**Table 17**

| **Properties** | **Unit** | **Test Method** | **Value** |
|---|---|---|---|
| Appearance and continuity | | ISO 21809-1, Annex B | Uniform colour, free of defects and discontinuities, delaminations, separations and pinholes. |
| Minimum impact strength at 23 °C | J/mm | ISO 21809-1, Annex E | >7 |
| Indentation at 23 °C 80°C | mm | Annex F | ≤ 0.1 |
| | | | ≤ 0.2 |
| Elongation at break of RPE (23°C +/- 3°C) | % | ISO 527 | NA |
| Degree of cure of FBE primer | °C | ISO 21809-1, Annex D | Max. Δ T_{g}: +3 |
| Product stability during extrusion of the RPC layer process | % Δ MFR | ISO 1133 | NA |
| Average radius of cathodic disbondment at: 23 °C/28 days; -1,5 V or 65 °C/ 24h;-3,5 V | mm | ISO 21809-1, Annex H, or | ≤ 7 ≤ 7 |
| Maximum operation temperature/28days/ -1.5 V | | CSA Z245.21, Clause 12.3 | ≤ 15 |
| Flexibility at 0°C | % strain | ISO 21809-1, Annex I | 5 |
| Hot water soak test | | ISO 21809-1, Annex J | No loss of adhesion |

Although the invention has been described with reference to illustrative embodiments, it is to be understood that
various changes and modifications may be effected therein by one skilled in the art.

## Claims

1. A method for coating an elongate metallic tubular article, comprising:
(a) heating the elongate metallic tubular article;
(b)applying a fusion bonded epoxy coating to the elongate metallic tubular article;
(c) applying a coating composition to the fusion bonded epoxy coating;
(d)optionally, curing the coating composition, wherein the curing preferably comprising heating the coating composition with an infra-red heater;
(e) optionally, applying a top coat to the coating composition coating, preferably a polyester top coat;
wherein the coating composition is a melted blend of:
(i) an epoxy master batch,
(ii) a filler master batch,
(iii) a polyolefin, and, optionally
(iv) an adhesion promoter;
wherein the epoxy master batch is in a solid form and comprises, in admixture:
(A) a curable epoxy resin in solid form;
(B) a polyolefin containing component comprising of at least one of (i) a compatibilizer polymer that is a modified polyolefin or (ii) a mixture of a polyolefin and a compatibilizer polymer that is a modified polyolefin; said modified polyolefin containing functional groups reactive with the curable epoxy resin in solid form; and wherein the epoxy master batch is free of curing agent; and
wherein the filler master batch is in a solid form and comprises, in admixture,
(X) a filler powder component;
(Y) a polyolefin containing component comprising of at least one of (i) a compatibilizer polymer that is a modified polyolefin or (ii) a mixture of a polyolefin and a compatibilizer polymer that is a modified polyolefin; said modified polyolefin containing functional groups compatible with and/or having affinity to the filler component;
(Z) a curing agent capable of curing an epoxy resin; and wherein the filler master batch is free of epoxy resin.

2. A method for coating an elongate metallic tubular article, comprising:
(a) heating the elongate metallic tubular article;
(b)applying a fusion bonded epoxy coating to the elongate metallic tubular article;
(c) applying a coating composition to the fusion bonded epoxy coating;
(d)optionally, curing the coating composition, wherein the curing preferably comprising heating the coating composition with an infra-red heater;
(e) optionally, applying a top coat to the coating composition coating, preferably a polyester top coat;
wherein the coating composition is a melted blend of:
(i) an epoxy master batch,
(ii) a filler master batch,
(iii) a cure master batch,
(iv) a polyolefin, and, optionally,
(v) an adhesion promoter;
wherein the epoxy master batch is in a solid form and comprises, in admixture:
(A) a curable epoxy resin in solid form;
(B) a polyolefin containing component comprising of at least one of (i) a compatibilizer polymer that is a modified polyolefin or (ii) a mixture of a polyolefin and a compatibilizer polymer that is a modified polyolefin; said modified polyolefin containing functional groups reactive with the curable epoxy resin in solid form; and wherein the epoxy master batch is free of curing agent; and
wherein the filler master batch is in a solid form and comprises, in admixture,
(X) a filler powder component;
(Y) a polyolefin containing component comprising of at least one of (i) a compatibilizer polymer that is a modified polyolefin or (ii) a mixture of a polyolefin and a compatibilizer polymer that is a modified polyolefin; said modified polyolefin containing functional groups compatible with and/or having affinity to the filler component; and wherein the filler master batch is free of curing agent; and
wherein the cure master batch is in a solid form and comprises, in admixture,
(Z) a polyolefin containing component comprising of at least one of (i) a polyolefin; (ii) a compatibilizer polymer that is a modified polyolefin or (ii) a mixture of a polyolefin and a compatibilizer polymer that is a modified polyolefin; said modified polyolefin containing functional groups reactive with the filler component; and
(Z1) a curing agent capable of curing an epoxy resin; and wherein the cure master batch is free of epoxy resin.

3. A filler master batch for use in the method of claim 1, comprising in admixture:
(A) a filler powder component;
(B) a polyolefin containing component comprising of at least one of (i) a compatibilizer polymer that is a modified polyolefin, preferably a grafted polyethylene or (ii) a mixture of a polyolefin, preferably polyethylene, and a compatibilizer polymer that is a modified polyolefin; said modified polyolefin containing functional groups compatible with and/or having affinity to the filler component;
(C) a curing agent capable of curing an epoxy resin;
(D) optionally an adhesion promoter/compatibilizer, preferably in powder form;
(E) optionally, a black polyethylene-based masterbatch;
(F) optionally a UV stabilizer;
wherein the master batch is free of epoxy resin.

4. The filler master batch of claim 3 comprising over 50%, preferably over 55%, more preferably over 60%, even more preferably over 65%, even more preferably about 67% by weight of the filler powder; and/or between 20-40%, preferably 20-30%, even more preferably 29%, by weight, of polyethylene; and/or 1-5%, preferably 2% by weight of grafted polyethylene; and/or between 0.1 - 2%, preferably 1% by weight of the adhesion promoter/compatibilizer; and/or between 0.5 - 1.5%, preferably 0.8% of the UV stabilizer.

5. The filler master batch of any one of claims 3-4 wherein: (a) the filler is selected from the group consisting of calcium carbonate, calcium sulfate, barium sulfate, a clay, preferablymontmorillonite or bentonite, glass beads and bubbles, microbeads, mica, silica, feldspar, and calcium meta silicate, preferably wollastonite; and/or (b) the curing agent is selected from the group consisting of a cyanoguanidine, a hydrazide compound, a hydrazine, a phenolic hardener, an anhydride, an aliphatic primary amine, an aromatic primary amine, an aliphatic secondary amine, and an aromatic secondary amine.

6. A cure master batch for use in the method of claim 2, comprising, in admixture,
(Z) a polyolefin containing component comprising of at least one of (i) a polyolefin; (ii) a compatibilizer polymer that is a modified polyolefin or (ii) a mixture of a polyolefin and a compatibilizer polymer that is a modified polyolefin; said modified polyolefin containing functional groups compatible with and/or having affinity to the filler component; and
(Z1) a curing agent capable of curing an epoxy resin; and wherein the cure master batch is free of epoxy resin, wherein preferably the curing agent comprises 15% or more, preferably 25% or more, more preferably 45% or more, by weight, of the cure master batch.

7. The cure master batch of claim 6, wherein the curing agent is selected from the group consisting of a cyanoguanidine, a hydrazide compound, a hydrazine, a phenolic hardener, an anhydride, an aliphatic primary amine, an aromatic primary amine, an aliphatic secondary amine, and an aromatic secondary amine.

8. A kit comprising:
[A] an epoxy master batch comprising in admixture:
(i) a curable epoxy resin in solid form;
(ii) a polyolefin containing component comprising of at least one of (i) a compatibilizer polymer that is a modified polyolefin, preferably a grafted polyethylene or (ii) a mixture of a polyolefin, preferably polyethylene, and a compatibilizer polymer that is a modified polyolefin; said modified polyolefin containing functional groups reactive with the curable epoxy resin in solid form;
(iii) optionally, an adhesion promoter/compatibilizer, preferably a solid powder adhesion promoter/compatibilizer; and
(iv) optionally, a black polyethylene-based masterbatch;
(v) optionally, a UV stabilizer;
(vi) wherein the epoxy master batch is free of curing agent;
[B] a filler master batch of any one of claims 3 -5;
[C] optionally an adhesion promoter;
[D] instructions for performing the method of claim 1 for the manufacture of a coating composition, said instructions including instructions for combining the epoxy master batch with the filler master batch, a polyolefin, and optionally an adhesion promoter/compatibilizer, and melting said combination to form the coating composition, for example, said instructions include an indication of a weight ratio of epoxy master batch, filler master batch, polyolefin, and optionally cure master batch and/or adhesion promoter, to be combined, wherein preferably the weight ratio is 50% polyolefin, 30% filler master batch, 17% epoxy master batch, and 3% adhesion promoter.

9. A kit comprising:
[A] an epoxy master batch comprising in admixture:
(i) a curable epoxy resin in solid form;
(ii) a polyolefin containing component comprising of at least one of (i) a compatibilizer polymer that is a modified polyolefin, preferably a grafted polyethylene or (ii) a mixture of a polyolefin, preferably polyethylene, and a compatibilizer polymer that is a modified polyolefin; said modified polyolefin containing functional groups reactive with the curable epoxy resin in solid form;
(iii) optionally, an adhesion promoter/compatibilizer, preferably a solid powder adhesion promoter/compatibilizer; and
(iv) optionally, a black polyethylene-based masterbatch;
(v) optionally, a UV stabilizer;
(vi) wherein the epoxy master batch is free of curing agent;
[B] a filler master batch comprising in admixture:
(i) a filler powder component; and
(ii) a polyolefin containing component comprising of at least one of (i) a compatibilizer polymer that is a modified polyolefin, preferably a grafted polyethylene, or (ii) a mixture of a polyolefin, preferably polyethylene, and a compatibilizer polymer that is a modified polyolefin; said modified polyolefin containing functional groups compatible with and/or having affinity to the filler component;
(iii) optionally an adhesion promoter/compatibilizer, preferably in powder form;
(iv) optionally a black polyethylene-based masterbatch;
(v) optionally a UV stabilizer
(vi) wherein the master batch is free of epoxy resin;
[C] a cure master batch of any one of claims 6-7;
[D] optionally an adhesion promoter;
[E] instructions for performing the method of claim 2 for the manufacture of a coating composition, said instructions including instructions for combining the epoxy master batch, the filler master batch, the cure master batch, a polyolefin, and optionally an adhesion promoter/compatibilizer, and melting said combination to form the coating composition, for example, said instructions include an indication of a weight ratio of epoxy master batch, filler master batch, polyolefin, and optionally cure master batch and/or adhesion promoter, to be combined, wherein preferably the weight ratio is 50% polyolefin, 30% filler master batch, 17% epoxy master batch, and 3% adhesion promoter.

10. The kit of any one of claims 8-9 wherein, in the epoxy master batch, a difference in melting point of the polyolefin containing component and the curable epoxy resin is less than 40%, preferably less than 20%, more preferably less than 10%, even more preferably less than 5%.

11. The kit of any one of claims 8-9 wherein the epoxy master batch comprises over 50%, preferably over 55%, more preferably over 58%, even more preferably 59%, by weight of the curable epoxy resin in solid form; and/or between 20-40%, preferably 20-30%, more preferably about 25%, more preferably, 25.9%, by weight, of polyethylene; and/or between 10-15%, preferably about 12% by weight of grafted polyethylene.

12. The kit of any one of claims 8-9 wherein the epoxy master batch consists essentially of, in admixture, by weight: about 26% polyethylene; about 14.5% grafted polyethylene; about 0.5% adhesion promoter; and about 59% solid epoxy resin and optionally also comprising a sufficient amount of black polyethylene-based masterbatch to add easily perceivable color to the epoxy master batch.

13. The kit of claim 12 wherein the epoxy master batch consists essentially of about 26% polyethylene; about 12% grafted polyethylene; about 0.3% adhesion promoter; about 59% solid epoxy resin; and about 2.7% black polyethylene-based master batch.

14. The kit of any one of claims 8-13 further comprising the polyolefin.

15. A method for manufacturing a coating composition, comprising:
- combining an epoxy master batch as described in any one of claims 9-14, a filler master batch of any one of claims 3-5, a polyolefin, and optionally an adhesion promoter to form an essentially homogeneous mixture;
- melting the essentially homogeneous mixture to form the coating composition.

## Patentansprüche

1. Ein Verfahren zur Beschichtung eines länglichen röhrenförmigen Metallgegenstands, umfassend:
(a) Erwärmen des länglichen röhrenförmigen Metallgegenstands;
(b) Aufbringen einer schmelzhaftenden Epoxybeschichtung auf den länglichen röhrenförmigen Metallgegenstand;
(c) Aufbringen einer Beschichtungszusammensetzung auf die schmelzhaftende Epoxybeschichtung;
(d) gegebenenfalls Härten der Beschichtungszusammensetzung, wobei das Härten vorzugsweise Erwärmen der Beschichtungszusammensetzung mit einem Infrarotstrahler umfasst;
(e) gegebenenfalls Aufbringen einer Deckschicht auf die Beschichtungszusammensetzungsbeschichtung, vorzugsweise einer Polyester-Deckschicht;
wobei die Beschichtungszusammensetzung eine Schmelzmischung aus:
(i) einer Epoxy-Vormischung,
(ii) einer Füllstoff-Vormischung,
(iii) einem Polyolefin und, gegebenenfalls,
(iv) einem Haftvermittler ist;
wobei die Epoxy-Vormischung in fester Form vorliegt und, in Mischung, umfasst:
(A) ein härtbares Epoxyharz in fester Form;
(B) eine Polyolefin enthaltende Komponente, die mindestens eines aus (i) einem verträglichmachenden Polymer, bei dem es sich um ein modifiziertes Polyolefin handelt, oder (ii) einem Gemisch eines Polyolefins und eines verträglichmachenden Polymers, bei dem es sich um ein modifiziertes Polyolefin handelt, umfasst; wobei das modifizierte Polyolefin funkionelle Reste enthält, die mit dem härtbaren Epoxyharz in fester Form reaktiv sind; und wobei die Epoxy-Vormischung frei von Härtungsmittel ist; und
wobei die Füllstoff-Vormischung in fester Form vorliegt und, in Mischung, umfasst:
(X) eine Füllstoffpulver-Komponente;
(Y) eine Polyolefin enthaltende Komponente, die mindestens eines aus (i) einem verträglichmachenden Polymer, bei dem es sich um ein modifiziertes Polyolefin handelt, oder (ii) einem Gemisch eines Polyolefins und eines verträglichmachenden Polymers, bei dem es sich um ein modifiziertes Polyolefin handelt, umfasst; wobei das modifizierte Polyolefin funktionelle Reste enthält, die mit der Füllstoff-Komponente kompatibel sind und/oder eine Affinität zu dieser haben;
(Z) ein Härtungsmittel, das in der Lage ist, ein Epoxyharz zu härten; und wobei die Füllstoff-Vormischung frei von Epoxyharz ist.

2. Ein Verfahren zur Beschichtung eines länglichen röhrenförmigen Metallgegenstands, umfassend:
(a) Erwärmen des länglichen röhrenförmigen Metallgegenstands;
(b) Aufbringen einer schmelzhaftenden Epoxybeschichtung auf den länglichen röhrenförmigen Metallgegenstand;
(c) Aufbringen einer Beschichtungszusammensetzung auf die schmelzhaftende Epoxybeschichtung;
(d) gegebenenfalls Härten der Beschichtungszusammensetzung, wobei das Härten vorzugsweise Erwärmen der Beschichtungszusammensetzung mit einem Infrarotstrahler umfasst;
(e) gegebenenfalls Aufbringen einer Deckschicht auf die Beschichtungszusammensetzungsbeschichtung, vorzugsweise einer Polyester-Deckschicht;
wobei die Beschichtungszusammensetzung eine Schmelzmischung aus:
(i) einer Epoxy-Vormischung,
(ii) einer Füllstoff-Vormischung,
(iii) einer Härtungsmittel-Vormischung,
(iv) einem Polyolefin und, gegebenenfalls,
(v) einem Haftvermittler ist;
wobei die Epoxy-Vormischung in fester Form vorliegt und, in Mischung, umfasst:
(A) ein härtbares Epoxyharz in fester Form;
(B) eine Polyolefin enthaltende Komponente, die mindestens eines aus (i) einem verträglichmachenden Polymer, bei dem es sich um ein modifiziertes Polyolefin handelt, oder (ii) einem Gemisch eines Polyolefins und eines verträglichmachenden Polymers, bei dem es sich um ein modifiziertes Polyolefin handelt, umfasst; wobei das modifizierte Polyolefin funkionelle Reste enthält, die mit dem härtbaren Epoxyharz in fester Form reaktiv sind; und wobei die Epoxy-Vormischung frei von Härtungsmittel ist; und
wobei die Füllstoff-Vormischung in fester Form vorliegt und, in Mischung, umfasst:
(X) eine Füllstoffpulver-Komponente;
(Y) eine Polyolefin enthaltende Komponente, die mindestens eines aus (i) einem verträglichmachenden Polymer, bei dem es sich um ein modifiziertes Polyolefin handelt, oder (ii) einem Gemisch eines Polyolefins und eines verträglichmachenden Polymers, bei dem es sich um ein modifiziertes Polyolefin handelt, umfasst; wobei das modifizierte Polyolefin funktionelle Reste enthält, die mit der Füllstoff-Komponente kompatibel sind und/oder eine Affinität zu dieser haben; und wobei die Füllstoff-Vormischung frei von Härtungsmittel ist; und
wobei die Härtungsmittel-Vormischung in fester Form vorliegt und, in Mischung, umfasst
(Z) eine Polyolefin enthaltende Komponente, die mindestens eines aus (i) einem Polyolefin, (ii) einem verträglichmachenden Polymer, bei dem es sich um ein modifiziertes Polyolefin handelt, oder (ii) einem Gemisch eines Polyolefins und eines verträglichmachenden Polymers, bei dem es sich um ein modifiziertes Polyolefin handelt, umfasst; wobei das modifizierte Polyolefin funktionelle Reste enthält, die mit der Füllstoff-Komponente reaktiv sind; und
(Z1) ein Härtungsmittel, das in der Lage ist, ein Epoxyharz zu härten; und wobei die Härtungsmittel-Vormischung frei von Epoxyharz ist.

3. Eine Füllstoff-Vormischung zur Verwendung in dem Verfahren nach Anspruch 1, umfassend, in Mischung:
(A) eine Füllstoffpulver-Komponente;
(B) eine Polyolefin enthaltende Komponente, die mindestens eines aus (i) einem verträglichmachenden Polymer, bei dem es sich um ein modifiziertes Polyolefin, vorzugsweise ein gepfropftes Polyethylen, handelt, oder (ii) einem Gemisch eines Polyolefins, vorzugsweise Polyethylen, und eines verträglichmachenden Polymers, bei dem es sich um ein modifiziertes Polyolefin handelt, umfasst; wobei das modifizierte Polyolefin funktionelle Reste enthält, die mit der Füllstoff-Komponente kompatibel sind und/oder eine Affinität zu dieser haben;
(C) ein Härtungsmittel, das in der Lage ist, ein Epoxyharz zu härten;
(D) gegebenenfalls einen Haftvermittler/Verträglichmacher, vorzugsweise in Pulverform;
(E) gegebenenfalls eine Vormischung auf der Basis von schwarzem Polyethylen;
(F) gegebenenfalls einen UV-Stabilisator;
wobei die Vormischung frei von Epoxyharz ist.

4. Die Füllstoff-Vormischung nach Anspruch 3, umfassend über 50%, vorzugsweise über 55%, stärker bevorzugt über 60%, noch stärker bevorzugt über 65%, noch stärker bevorzugt etwa 67 Gew.-% des Füllstoffpulvers; und/oder zwischen 20-40%, vorzugsweise 20-30%, stärker bevorzugt 29 Gew.-% Polyethylen; und/oder 1-5%, vorzugsweise 2 Gew.-% gepfropftes Polyethylen; und/oder zwischen 0,1-2%, vorzugsweise 1 Gew.-% des Haftvermittlers/Verträglichmachers; und/oder zwischen 0,5-1,5%, vorzugsweise 0,8% des UV-Stabilisators.

5. Die Füllstoff-Vormischung nach einem der Ansprüche 3-4, wobei: (a) der Füllstoff ausgewählt ist aus der Gruppe bestehend aus Calciumcarbonat, Calciumsulfat, Bariumsulfat, einer Tonerde, vorzugsweise Montmorillonit oder Bentonit, Glaskügelchen und -blasen, Mikrokügelchen, Glimmer, Siliciumdioxid, Feldspat und Calciummetasilicat, vorzugsweise Wollastonit; und/oder (b) das Härtungsmittel ausgewählt ist aus der Gruppe bestehend aus einem Cyanoguanidin, einer Hydrazidverbindung, einem Hydrazin, einem Phenolhärter, einem Anhydrid, einem aliphatischen primären Amin, einem aromatischen primären Amin, einem aliphatischen sekundären Amin und einem aromatischen sekundären Amin.

6. Eine Härtungsmittel-Vormischung zur Verwendung in dem Verfahren nach Anspruch 2, umfassend, in Mischung,
(Z) eine Polyolefin enthaltende Komponente, die mindestens eines aus (i) einem Polyolefin; (ii) einem verträglichmachenden Polymer, bei dem es sich um ein modifiziertes Polyolefin handelt, oder (ii) einem Gemisch eines Polyolefins und eines verträglichmachenden Polymers, bei dem es sich um ein modifiziertes Polyolefin handelt, umfasst; wobei das modifizierte Polyolefin funktionelle Reste enthält, die mit der Füllstoff-Komponente kompatibel sind und/oder eine Affinität zu dieser haben; und
(Z1) ein Härtungsmittel, das in der Lage ist, ein Epoxyharz zu härten; und wobei die Härtungsmittel-Vormischung frei von Epoxyharz ist, wobei das Härtungsmittel vorzugsweise 15% oder mehr, vorzugsweise 25% oder mehr, stärker bevorzugt 45 Gew.-% oder mehr der Härtungsmittel-Vormischung umfasst.

7. Die Härtungsmittel-Vormischung nach Anspruch 6, wobei das Härtungsmittel ausgewählt ist aus der Gruppe bestehend aus einem Cyanoguanidin, einer Hydrazidverbindung, einem Hydrazin, einem Phenolhärter, einem Anhydrid, einem aliphatischen primären Amin, einem aromatischen primären Amin, einem aliphatischen sekundären Amin und einem aromatischen sekundären Amin.

8. Ein Kit, umfassend:
[A] eine Epoxy-Vormischung, umfassend, in Mischung:
(i) ein härtbares Epoxyharz in fester Form;
(ii) eine Polyolefin enthaltende Komponente, die mindestens eines aus (i) einem verträglichmachenden Polymer, bei dem es sich um ein modifiziertes Polyolefin, vorzugsweise ein gepfropftes Polyethylen, handelt, oder (ii) einem Gemisch eines Polyolefins, vorzugsweise Polyethylen, und eines verträglichmachenden Polymers, bei dem es sich um ein modifiziertes Polyolefin handelt, umfasst; wobei das modifizierte Polyolefin funktionelle Reste enthält, die mit dem härtbaren Epoxyharz in fester Form reaktiv sind;
(iii) gegebenenfalls einen Haftvermittler/Verträglichmacher, vorzugsweise einen Haftvermittler/Verträglichmacher als festes Pulver; und
(iv) gegebenenfalls eine Vormischung auf der Basis von schwarzem Polyethylen;
(v) gegebenenfalls einen UV-Stabilisator;
(vi) wobei die Epoxy-Vormischung frei von Härtungsmittel ist;
[B] eine Füllstoff-Vormischung nach einem der Ansprüche 3-5;
[C] gegebenenfalls einen Haftvermittler;
[D] Anweisungen zum Durchführen des Verfahrens nach Anspruch 1 zur Herstellung einer Beschichtungszusammensetzung, wobei die Anweisungen Anweisungen zum Vereinigen der Epoxy-Vormischung mit der Füllstoff-Vormischung, einem Polyolefin und gegebenenfalls einem Haftvermittler/Verträglichmacher, und Schmelzen der Kombination, um die Beschichtungszusammensetzung zu bilden, beinhalten, z.B. beinhalten die Anweisungen eine Angabe eines Gewichtsverhältnisses der zu vereinigenden Epoxy-Vormischung, Füllstoff-Vormischung, des Polyolefins und gegebenenfalls der Härtungsmittel-Vormischung und/oder des Haftvermittlers, wobei das Gewichtsverhältnis vorzugsweise 50% Polyolefin, 30% Füllstoff-Vormischung, 17% Epoxy-Vormischung und 3% Haftvermittler beträgt.

9. Ein Kit, umfassend:
[A] eine Epoxy-Vormischung, umfassend, in Mischung:
(i) ein härtbares Epoxyharz in fester Form;
(ii) eine Polyolefin enthaltende Komponente, die mindestens eines aus (i) einem verträglichmachenden Polymer, bei dem es sich um ein modifiziertes Polyolefin, vorzugsweise ein gepfropftes Polyethylen, handelt, oder (ii) einem Gemisch eines Polyolefins, vorzugsweise Polyethylen, und eines verträglichmachenden Polymers, bei dem es sich um ein modifiziertes Polyolefin handelt, umfasst; wobei das modifizierte Polyolefin funktionelle Reste enthält, die mit dem härtbaren Epoxyharz in fester Form reaktiv sind;
(iii) gegebenenfalls einen Haftvermittler/Verträglichmacher, vorzugsweise einen Haftvermittler/Verträglichmacher als festes Pulver; und
(iv) gegebenenfalls eine Vormischung auf der Basis von schwarzem Polyethylen;
(v) gegebenenfalls einen UV-Stabilisator;
(vi) wobei die Epoxy-Vormischung frei von Härtungsmittel ist;
[B] eine Füllstoff-Vormischung, umfassend, in Mischung:
(i) eine Füllstoffpulver-Komponente; und
(ii) eine Polyolefin enthaltende Komponente, die mindestens eines aus (i) einem verträglichmachenden Polymer, bei dem es sich um ein modifiziertes Polyolefin, vorzugsweise ein gepfropftes Polyethylen, handelt, oder (ii) einem Gemisch eines Polyolefins, vorzugsweise Polyethylen, und eines verträglichmachenden Polymers, bei dem es sich um ein modifiziertes Polyolefin handelt, umfasst; wobei das modifizierte Polyolefin funktionelle Reste enthält, die mit der Füllstoff-Komponente kompatibel sind und/oder eine Affinität zu dieser haben;
(iii) gegebenenfalls einen Haftvermittler/Verträglichmacher, vorzugsweise in Pulverform;
(iv) gegebenenfalls eine Vormischung auf der Basis von schwarzem Polyethylen;
(v) gegebenenfalls einen UV-Stabilisator;
(vi) wobei die Vormischung frei von Epoxyharz ist;
[C] eine Härtungsmittel-Vormischung nach einem der Ansprüche 6-7;
[D] gegebenenfalls einen Haftvermittler;
[E] Anweisungen zum Durchführen des Verfahrens nach Anspruch 2 zur Herstellung einer Beschichtungszusammensetzung, wobei die Anweisungen Anweisungen zum Vereinigen der Epoxy-Vormischung, der Füllstoff-Vormischung, der Härtungsmittel-Vormischung, eines Polyolefins und gegebenenfalls eines Haftvermittlers/Verträglichmachers, und Schmelzen der Kombination, um die Beschichtungszusammensetzung zu bilden, beinhalten, z.B. beinhalten die Anweisungen eine Angabe eines Gewichtsverhältnisses der zu vereinigenden Epoxy-Vormischung, Füllstoff-Vormischung, des Polyolefins und gegebenenfalls der Härtungsmittel-Vormischung und/oder des Haftvermittlers, wobei das Gewichtsverhältnis vorzugsweise 50% Polyolefin, 30% Füllstoff-Vormischung, 17% Epoxy-Vormischung und 3% Haftvermittler beträgt.

10. Das Kit nach einem der Ansprüche 8-9, wobei in der Epoxy-Vormischung eine Differenz des Schmelzpunkts der Polyolefin enthaltenden Komponente und des härtbaren Epoxyharzes weniger als 40%, vorzugsweise weniger als 20%, stärker bevorzugt weniger als 10%, noch stärker bevorzugt weniger als 5% beträgt.

11. Das Kit nach einem der Ansprüche 8-9, wobei die Epoxy-Vormischung über 50%, vorzugsweise über 55%, stärker bevorzugt über 58%, noch stärker bevorzugt 59 Gew.-% des härtbaren Epoxyharzes in fester Form; und/oder zwischen 20-40%, vorzugsweise 20-30%, stärker bevorzugt etwa 25%, noch stärker bevorzugt 25,9 Gew.-% Polyethylen; und/oder zwischen 10-15%, vorzugsweise etwa 12 Gew.-% gepfropftes Polyethylen umfasst.

12. Das Kit nach einem der Ansprüche 8-9, wobei die Epoxy-Vormischung im Wesentlichen aus, in Mischung, in Gew.-%: etwa 26% Polyethylen; etwa 14,5% gepfropftem Polyethylen; etwa 0,5% Haftvermittler; und etwa 59% festem Epoxyharz besteht und gegebenenfalls auch eine ausreichende Menge einer Vormischung auf der Basis von schwarzem Polyethylen umfasst, um der Epoxy-Vormischung eine leicht wahrnehmbare Farbe zu verleihen.

13. Das Kit nach Anspruch 12, wobei die Epoxy-Vormischung im Wesentlichen aus etwa 26% Polyethylen, etwa 12% gepfropftem Polyethylen; etwa 0,3% Haftvermittler; etwa 59% festem Epoxyharz; und etwa 2,7% einer Vormischung auf der Basis von schwarzem Polyethylen besteht.

14. Das Kit nach einem der Ansprüche 8-13, weiter umfassend das Polyolefin.

15. Ein Verfahren zur Herstellung einer Beschichtungszusammensetzung, umfassend:
- Vereinigen einer Epoxy-Vormischung, wie in einem der Ansprüche 9-14 beschrieben, einer Füllstoff-Vormischung nach einem der Ansprüche 3-5, eines Polyolefins und gegebenenfalls eines Haftvermittlers, um ein im Wesentlichen homogenes Gemisch zu bilden;
- Schmelzen des im Wesentlichen homogenen Gemischs, um die Beschichtungszusammensetzung zu bilden.

## Revendications

1. Méthode de revêtement d'un article tubulaire métallique allongé, comprenant :
(a) le chauffage de l'article tubulaire métallique allongé ;
(b) l'application d'un revêtement époxy lié par fusion sur l'article tubulaire métallique allongé ;
(c) l'application d'une composition de revêtement sur le revêtement époxy lié par fusion ;
(d) éventuellement, le durcissement de la composition de revêtement, où le durcissement comprend de préférence le chauffage de la composition de revêtement avec un dispositif de chauffage infrarouge.
(e) éventuellement, l'application d'une couche de finition sur le revêtement formé par la composition de revêtement, de préférence, une couche de finition polyester ;
dans laquelle la composition de revêtement est un mélange fondu de :
(i) un mélange maître époxy,
(ii) un mélange maître de charge,
(iii) une polyoléfine, et, éventuellement
(iv) un promoteur d'adhérence ;
dans laquelle le mélange maître époxy est sous forme solide et comprend, en mélange :
(A) une résine époxy durcissable sous forme solide ;
(B) un composant contenant une polyoléfine comprenant au moins l'un de (i) un polymère compatibilisant qui est une polyoléfine modifiée ou (ii) un mélange de polyoléfine et d'un polymère compatibilisant qui est une polyoléfine modifiée ; ladite polyoléfine modifiée contenant des groupes fonctionnels capables de réagir avec la résine époxy durcissable sous forme solide ; et dans laquelle le mélange maître époxy est exempt d'agent durcisseur ; et
dans laquelle le mélange maître de charge est sous forme solide et comprend, en mélange :
(X) un composant à base de charge pulvérulente ;
(Y) un composant contenant une polyoléfine comprenant au moins l'un de (i) un polymère compatibilisant qui est une polyoléfine modifiée ou (ii) un mélange de polyoléfine et d'un polymère compatibilisant qui est une polyoléfine modifiée ; ladite polyoléfine modifiée contenant des groupes fonctionnels compatibles et/ou ayant de l'affinité pour le composant à base de charge ;
(Z) un agent durcisseur capable de durcir une résine époxy ; et dans laquelle le mélange maître de charge est exempt de résine époxy.

2. Méthode de revêtement d'un article tubulaire métallique allongé, comprenant :
(a) le chauffage de l'article tubulaire métallique allongé ;
(b) l'application d'un revêtement époxy lié par fusion sur l'article tubulaire métallique allongé ;
(c) l'application d'une composition de revêtement sur le revêtement époxy lié par fusion ;
(d) éventuellement, le durcissement de la composition de revêtement, où le durcissement comprend de préférence le chauffage de la composition de revêtement avec un dispositif de chauffage infrarouge ;
(e) éventuellement, l'application d'une couche de finition sur le revêtement formé par la composition de revêtement, de préférence, une couche de finition polyester ;
dans laquelle la composition de revêtement est un mélange fondu de :
(i) un mélange maître époxy,
(ii) un mélange maître de charge,
(iii) un mélange maître durcisseur,
(iv) une polyoléfine, et, éventuellement
(v) un promoteur d'adhérence ;
dans laquelle le mélange maître époxy est sous forme solide et comprend, en mélange :
(A) une résine époxy durcissable sous forme solide ;
(B) un composant contenant une polyoléfine comprenant au moins l'un de (i) un polymère compatibilisant qui est une polyoléfine modifiée ou (ii) un mélange de polyoléfine et d'un polymère compatibilisant qui est une polyoléfine modifiée ; ladite polyoléfine modifiée contenant des groupes fonctionnels capables de réagir avec la résine époxy durcissable sous forme solide ; et dans laquelle le mélange maître époxy est exempt d'agent durcisseur ; et
dans laquelle le mélange maître de charge est sous forme solide et comprend, en mélange :
(X) un composant à base de charge pulvérulente ;
(Y) un composant contenant une polyoléfine comprenant au moins l'un de (i) un polymère compatibilisant qui est une polyoléfine modifiée ou (ii) un mélange de polyoléfine et d'un polymère compatibilisant qui est une polyoléfine modifiée ; ladite polyoléfine modifiée contenant des groupes fonctionnels compatibles avec et/ou ayant de l'affinité pour le composant à base de charge ; et dans laquelle le mélange maître de charge est exempt d'agent durcisseur ; et
dans laquelle le mélange maître durcisseur est sous forme solide et comprend, en mélange,
(Z) un composant contenant une polyoléfine comprenant au moins l'un de (i) une polyoléfine ; et/ou (ii) un polymère compatibilisant qui est une polyoléfine modifiée ou (ii) un mélange de polyoléfine et d'un polymère compatibilisant qui est une polyoléfine modifiée ; ladite polyoléfine modifiée contenant des groupes fonctionnels capables de réagir avec le composant à base de charge ; et
(Z1) un agent durcisseur capable de durcir une résine époxy ; et où le mélange maître durcisseur est exempt de résine époxy.

3. Mélange maître de charge pour son utilisation dans la méthode selon la revendication 1, comprenant en mélange :
(A) un composant à base de charge pulvérulente ;
(B) un composant contenant une polyoléfine comprenant au moins (i) un polymère compatibilisant qui est une polyoléfine modifiée, de préférence un polyéthylène greffé ou (ii) un mélange de polyoléfine, de préférence d'un polyéthylène, et d'un polymère compatibilisant qui est une polyoléfine modifiée ; ladite polyoléfine modifiée contenant des groupes fonctionnels compatibles et/ou ayant de l'affinité pour le composant à base de charge ;
(C) un agent durcisseur capable de durcir une résine époxy ;
(D) éventuellement un promoteur d'adhérence/compatibilisant, de préférence sous forme pulvérulente ;
(E) éventuellement, un mélange maître à base de polyéthylène noir ;
(F) éventuellement un stabilisant UV ;
dans lequel le mélange maître est exempt de résine époxy.

4. Mélange maître de charge selon la revendication 3 comprenant plus de 50 %, de préférence plus de 55 %, plus préférablement plus de 60 %, encore plus préférablement plus de 65 %, mieux encore environ 67 % en poids de charge pulvérulente ; et/ou entre 20-40 %, de préférence 20-30 %, plus préférablement 29 %, en poids, de polyéthylène ; et/ou 1-5 %, de préférence 2 % en poids de polyéthylène greffé ; et/ou entre 0,1-2 %, de préférence 1 % en poids de promoteur d'adhérence/compatibilisant ; et/ou entre 0,5-1,5 %, de préférence 0,8 de stabilisant UV.

5. Mélange maître de charge selon l'une quelconque des revendications 3-4 dans lequel : (a) la charge est choisie dans le groupe constitué par le carbonate de calcium, le sulfate de calcium, le sulfate de baryum, une argile, de préférence la montmorillonite ou bentonite, des billes et bulles de verre, des microbilles, du mica, de la silice, du feldspath, et du métasilicate de calcium, de préférence de la wollastonite ; et/ou (b) l'agent durcisseur est choisi dans le groupe constitué par une cyanoguanidine, un composé d'hydrazide, une hydrazine, un durcisseur phénolique, un anhydride, une amine primaire aliphatique, une amine primaire aromatique, une amine secondaire aliphatique, et une amine secondaire aromatique.

6. Mélange maître durcisseur pour son utilisation dans la méthode selon la revendication 2, comprenant, en mélange,
(Z) un composant contenant une polyoléfine comprenant au moins l'un de (i) une polyoléfine ; (ii) un polymère compatibilisant qui est une polyoléfine modifiée ou (ii) un mélange de polyoléfine et d'un polymère compatibilisant qui est une polyoléfine modifiée ; ladite polyoléfine modifiée contenant des groupes fonctionnels compatibles avec et/ou ayant de l'affinité pour le composant à base de charge ; et
(Z1) un agent durcisseur capable de durcir une résine époxy ; et dans lequel le mélange maître durcisseur est exempt de résine époxy, dans lequel de préférence l'agent durcisseur comprend 15 % ou plus, de préférence 25 % ou plus, plus préférablement 45 % ou plus, en poids, du mélange maître durcisseur.

7. Mélange maître durcisseur selon la revendication 6, dans lequel l'agent durcisseur est choisi dans le groupe constitué par une cyanoguanidine, un composé hydrazide, une hydrazine, un durcisseur phénolique, un anhydride, une amine primaire aliphatique, une amine primaire aromatique, une amine secondaire aliphatique, et une amine secondaire aromatique.

8. Kit comprenant :
[A] un mélange maître époxy comprenant en mélange :
(i) une résine époxy durcissable sous forme solide ;
(ii) un composant contenant une polyoléfine comprenant au moins l'un de (i) un polymère compatibilisant qui est une polyoléfine modifiée, de préférence un polyéthylène greffé, ou (ii) un mélange de polyoléfine, de préférence d'un polyéthylène, et d'un polymère compatibilisant qui est une polyoléfine modifiée ; ladite polyoléfine modifiée contenant des groupes fonctionnels capables de réagir avec la résine époxy durcissable sous forme solide ;
(iii) éventuellement, un promoteur d'adhérence/compatibilisant, de préférence un promoteur d'adhérence/compatibilisant pulvérulent solide ; et
(iv) éventuellement, un mélange maître à base de polyéthylène noir ;
(v) éventuellement un stabilisant UV ;
(vi) dans lequel le mélange maître époxy est exempt d'agent durcisseur ;
[B] un mélange maître de charge selon l'une quelconque des revendications 3-5 ;
[C] éventuellement un promoteur d'adhérence ;
[D] des instructions pour la mise en oeuvre de la méthode selon la revendication 1 pour la fabrication d'une composition de revêtement, lesdites instructions comprenant des instructions pour combiner le mélange maître époxy avec le mélange maître de charge, une polyoléfine, et éventuellement un promoteur d'adhérence/compatibilisant, et de fusion de ladite combinaison pour former la composition de revêtement, par exemple, lesdites instructions contiennent une indication de rapport en poids du mélange maître époxy, du mélange maître de charge, de la polyoléfine, et éventuellement du mélange maître durcisseur et/ou du promoteur d'adhérence, à combiner, dans laquelle de préférence le rapport en poids est de 50 % de polyoléfine, 30 % de mélange maître de charge, 17 % de mélange maître époxy, et 3 % de promoteur d'adhérence.

9. Kit comprenant :
[A] un mélange maître époxy comprenant en mélange :
(i) une résine époxy durcissable sous forme solide ;
(ii) un composant contenant une polyoléfine comprenant au moins (i) un polymère compatibilisant qui est une polyoléfine modifiée, de préférence un polyéthylène greffé, ou (ii) un mélange de polyoléfine, de préférence de polyéthylène, et d'un polymère compatibilisant qui est une polyoléfine modifiée ; ladite polyoléfine modifiée contenant des groupes fonctionnels capables de réagir avec la résine époxy durcissable sous forme solide ;
(iii) éventuellement, un promoteur d'adhérence/compatibilisant, de préférence un promoteur d'adhérence/compatibilisant pulvérulent solide ; et
(iv) éventuellement, un mélange maître à base de polyéthylène noir ;
(v) éventuellement, un stabilisant UV ;
(vi) dans lequel le mélange maître époxy est exempt d'agent durcisseur ;
[B] un mélange maître de charge comprenant en mélange :
(i) un composant à base de charge pulvérulente ; et
(ii) un composant contenant une polyoléfine comprenant au moins l'un de (i) un polymère compatibilisant qui est une polyoléfine modifiée, de préférence un polyéthylène greffé, ou (ii) un mélange de polyoléfine, de préférence d'un polyéthylène, et d'un polymère compatibilisant qui est une polyoléfine modifiée ; ladite polyoléfine modifiée contenant des groupes fonctionnels compatibles avec et/ou ayant de l'affinité pour le composant à base de charge;
(iii) éventuellement, un promoteur d'adhérence/compatibilisant, de préférence sous forme pulvérulente ;
(iv) éventuellement un mélange maître à base de polyéthylène noir ;
(v) éventuellement un stabilisant UV ;
(vi) dans lequel le mélange maître est exempt de résine époxy ;
[C] un mélange maître durcisseur selon l'une quelconque des revendications 6-7 ;
[D] éventuellement un promoteur d'adhérence ;
[E] des instructions pour la mise en oeuvre de la méthode selon la revendication 2 pour la fabrication d'une composition de revêtement, lesdites instructions comprenant des instructions pour combiner le mélange maître époxy, le mélange maître de charge, le mélange maître durcisseur, une polyoléfine, et éventuellement un promoteur d'adhérence/compatibilisant, et la fusion de ladite combinaison pour former la composition de revêtement, par exemple, lesdites instructions contiennent une indication de rapport en poids du mélange maître époxy, du mélange maître de charge, de la polyoléfine, et éventuellement du mélange maître durcisseur et/ou du promoteur d'adhérence, à combiner, où de préférence le rapport en poids est de 50 % de polyoléfine, 30 % de mélange maître de charge, 17 % de mélange maître époxy, et 3 % de promoteur d'adhérence.

10. Kit selon l'une quelconque des revendications 8-9 dans lequel, dans le mélange maître époxy, une différence de point de fusion du composant contenant une polyoléfine et de la résine époxy durcissable est inférieure à 40 %, de préférence inférieure à 20 %, plus préférablement inférieure à 10 %, mieux, inférieure à 5 %.

11. Kit selon l'une quelconque des revendications 8-9 dans lequel le mélange maître époxy comprend plus de 50 %, de préférence plus de 55 %, plus préférablement plus de 58 %, mieux encore 59 %, en poids de résine époxy durcissable sous forme solide ; et/ou entre 20-40 %, de préférence 20-30 %, plus préférablement environ 25 %, mieux encore, 25,9 %, en poids, de polyéthylène ; et/ou entre 10-15 %, de préférence environ 12 % en poids, de polyéthylène greffé.

12. Kit selon l'une quelconque des revendications 8-9 dans lequel le mélange maître époxy comprend essentiellement, en mélange, en poids : environ 26 % de polyéthylène ; environ 14,5 % de polyéthylène greffé ; environ 0,5 % de promoteur d'adhérence ; et environ 59 % de résine époxy durcissable solide et éventuellement comprenant également une quantité suffisante de mélange maître à base de polyéthylène noir pour conférer une couleur facilement perceptible au mélange maître époxy.

13. Kit selon la revendication 12 dans lequel le mélange maître époxy comprend essentiellement environ 26 % de polyéthylène ; environ 12 % de polyéthylène greffé; environ 0,3 % de promoteur d'adhérence ; environ 59 % de résine époxy solide ; et environ 2,7 % de mélange maître à base de polyéthylène noir.

14. Kit selon l'une quelconque des revendications 8-13 comprenant en outre la polyoléfine.

15. Méthode de fabrication d'une composition de revêtement, comprenant :
- la combinaison d'un mélange maître époxy tel que décrit dans l'une quelconque des revendications 9-14, d'un mélange maître de charge selon l'une quelconque des revendications 3-5, d'une polyoléfine, éventuellement d'un promoteur d'adhérence pour former un mélange sensiblement homogène ;
- la fusion du mélange sensiblement homogène pour former la composition de revêtement.
